# FASCICULE DE BREVET EUROPEEN

(11) **EP 1 668 825 B1**
(45) Date de publication et mention de la délivrance du brevet: **10.04.2013**
(21) Numéro de dépôt: 04787324.5
(22) Date de dépôt: 07.09.2004
(51) Int. Cl.: H04L 12/24

(54) **PROCEDE ET SYSTEME POUR LE TRANSFERT D'INFORMATIONS D'ADMINISTRATION DE RESEAU DE COMMUNICATION**
VERFAHREN UND SYSTEM ZUM TRANSFER VON KOMMUNIKATIONSNETZ-ADMINISTRATIONS-INFORMATIONEN
METHOD AND SYSTEM FOR THE TRANSFER OF COMMUNICATION NETWORK ADMINISTRATION INFORMATION

(30) Priorité: 26.09.2003 FR 0311345
(43) Date de publication de la demande: 14.06.2006
(73) Titulaire: FRANCE TELECOM, 75015 Paris (FR)
(72) Inventeur: STEPHAN, Emile, F-22560 Pleumeur Bodou (FR); LE MOULLAC-JEWITT, Jessie, South San Francisco, CA (US); MOREAU, Eric, F-91190 Gif sur Yvette (FR)
(74) Mandataire: Cabinet Plasseraud
(86) Numéro de dépôt international: PCT/FR2004/002271
(87) Numéro de publication internationale: WO 2005/034429

(56) Documents cités:
- US-A- 5 291 583
- US-A- 5 737 518
- US-A1- 2003 056 193
- GAVALAS D ET AL: "A hybrid centralised-distributed network management architecture" COMPUTERS AND COMMUNICATIONS, 1999. PROCEEDINGS. IEEE INTERNATIONAL SYMPOSIUM ON RED SEA, EGYPT 6-8 JULY 1999, LOS ALAMITOS, CA, USA,IEEE COMPUT. SOC, US, 6 juillet 1999 (1999-07-06), pages 434-441, XP010555067 ISBN: 0-7695-0250-4

## Description

Le domaine de l'invention est celui de l'administration de réseaux de communication. Le terme administration est à prendre ici dans son sens le plus large c'est à dire qu'il concerne tant la configuration que la gestion, voire la commande des équipements de réseaux de communication.

Pour configurer un équipement, on peut par exemple utiliser un protocole d'interface interactive tel que le protocole connu TELNET. Ce protocole est normalisé mais les données accessibles ne le sont pas. Ce qui pose problème, en particulier pour une quantité considérable d'équipements de réseaux comme c'est souvent le cas.

La gestion comprend entre autres, la prédiction et la détection de fautes. Dans l'état connu de la technique, on peut citer à titre d'exemple le document WO02/46928 qui divulgue un système qui traite des informations obtenues de capteurs associés à des variables répertoriées dans une base d'information d'administration nommée MIB (Management Information Base). Pour en permettre une interprétation et un traitement à grande échelle relativement à de nombreux équipements, les définitions des variables sont spécifiées au moyen d'un langage normalisé nommé SMI (Structure of Management Information). Un protocole nommé SNMP (Simple Network Management Protocol), lui aussi normalisé, permet d'accéder aux variables par échange de requêtes/réponses entre équipements du réseau.

Comme c'est le cas par exemple dans le document WO02/17094, les variables peuvent concerner des dispositifs qui sont tant des capteurs de température, des états d'alarme ou des adresses réseau de type IP que des équipements plus complexes. Pour de tels dispositifs, on parle alors d'objets répertoriés dans une ou plusieurs différentes MIB. Ce document divulgue des moyens pour interfacer les dispositifs sous SNMP.

La technique basée sur le triplet SNMP/SMI/MIB a atteint une certaine maturité. Tant les spécifications des MIB elles-mêmes ainsi que celles des objets qui y sont répertoriés, sont précises à la fois en termes de sémantique et de taille. L'élaboration des MIB est bien maîtrisée, éventuellement au moyen d'automatismes tels que ceux proposés par exemple dans le document US6009431. L'identification absolue des objets par les normes (X208 et X209), l'identification absolue des instances d'objets par l'index d'instance, font que les MIB fournissent un référentiel normatif prisé par les opérateurs. Le protocole SNMP est largement utilisé pour de nombreux types d'équipements et de services tels en témoignent les documents WO01/44924, EP1158720 ou encore WO02/47322.

Cependant, le protocole SNMP n'est pas satisfaisant pour un transport de volume important de données car il ajoute une surcharge en informations supplémentaires (overhead) considérable. Le mode par requêtes-réponses (polling) rend difficile une optimisation de la gestion interne des données dans les équipements de réseau. La montée en débit de communication des équipements accroît le risque de dépassement de mantisse des compteurs avec pour effet cascade d'augmenter en conséquence la fréquence de requêtes-réponses nécessaire pour éviter ce dépassement de mantisses. L'échange des identifiants d'instances entre machines, augmente considérablement la bande passante nécessaire, en première approximation d'un facteur triple, au détriment de la bande passante utile pour les données des utilisateurs. Bien que, approximativement 85% des objets des MIB soient des champs de tables, bien que, approximativement 99,9% des instances soient des instances de ces objets, c'est à dire de champs de tables, le protocole SNMP n'optimise pas la consultation des tables. Alors que les champs d'une ligne de table ont le même index, le protocole SNMP répète l'index pour chaque champ, ajoutant ainsi un sur-débit d'environ cent octets par ligne de table consultée.

Le document US5737518 divulgue un procédé et un dispositif pour tester l'implémentation d'un objet dans un système de gestion d'objet. Le procédé identifie automatiquement au moins un attribut d'un objet sélectionné, génère automatiquement un ou plusieurs signaux de test en fonction de l'attribut identifié, analyse automatiquement la réponse retournée en réponse au signal de test communiqué et signale toute erreur détectée.

Un objet de l'invention est un procédé pour minimiser une bande passante nécessaire aux transferts d'informations d'administration de réseau de communication, lesdites informations concernant des objets relatifs à des éléments matériels, logiciels ou de fonctionnement de réseau, répertoriés dans une base d'information d'administration et à chacun desquels est associée une spécification en langage formel.

Le procédé est remarquable en ce qu'il comprend des étapes consistant à:
- générer à partir de ladite spécification pour chaque objet, un couple de mots dont la valeur du premier mot est relative à une indication de l'objet et la valeur du deuxième mot est relative à une longueur d'information de l'objet;
- construire un patron comprenant un ensemble ordonné de couples de mots générés et un identificateur dudit patron, permettant d'émettre ensuite une suite ordonnée d'informations correspondant audit patron.

Plus particulièrement, le procédé comprend des étapes consistant à:
- parcourir un arbre de la base d'information d'administration dont chaque noeud est associé à un objet;
- tester à chaque noeud si l'objet est de type scalaire ou table;
- construire le patron en ajoutant le couple de mots généré au patron si l'objet est de type scalaire;
- construire un autre patron dit de table si l'objet est de type table pour les objets de la table.

Avantageusement, le procédé comprend des étapes consistant à construire en plus un patron de configuration comprenant les couples de mots générés pour des objets à accès modifiable.

Un objet de l'invention est aussi un système pour minimiser une bande passante nécessaire aux transferts d'informations d'administration de réseau de communication, lesdites informations concernant des objets relatifs à des éléments matériels, logiciels ou de fonctionnement de réseau, répertoriés dans une base d'information d'administration et à chacun desquels est associée une spécification en langage formel.

Le système est remarquable en ce qu'il comprend un module traducteur agencé pour générer à partir de ladite spécification pour chaque objet, un couple de mots dont la valeur du premier mot est relative à une indication de l'objet et la valeur du deuxième mot est relative à une longueur d'information de l'objet et pour générer un patron comprenant un ensemble ordonné de couples de mots et un identificateur, permettant d'émettre ensuite une suite ordonnée d'informations correspondant audit patron.

Plus particulièrement, le module traducteur est agencé pour parcourir un arbre de la base d'information d'administration dont chaque noeud est associé à un objet, pour tester à chaque noeud si l'objet est de type scalaire ou table et pour construire le patron en ajoutant le couple de mots généré au patron si l'objet est de type scalaire ou construire un autre patron dit de table si l'objet est de type table pour les objets de la table.

Avantageusement, le module traducteur est agencé pour construire en plus un patron de configuration comprenant les couples de mots générés pour des objets à accès modifiable.

Par exemple, le système comprend un module superviseur agencé pour collecter des mesures et un module d'exportation agencé pour transmettre à un serveur, au moins un ticket de données relatives à ces mesures en le faisant précéder du patron de ce ticket de données.

L'invention sera mieux comprise à partir de l'exemple de mise en oeuvre décrit à présent en référence aux dessins annexés dans lesquels:
- la figure 1 est un schéma de système conforme à l'invention;
- les figures 2 à 7 montrent des étapes de procédé conforme à l'invention;
- la figure 8 représente une structure d'arbre pour un objet particulier de type table;
- la figure 9 montre un patron de l'objet représenté en figure 8;
- la figure 10 montre un exemple de ticket de données, conforme au patron de la figure 9;
- la figure 11 représente une structure d'arbre pour un autre objet particulier de type table;
- la figure 12 montre un patron de l'objet représenté en figure 11;
- la figure 13 montre un exemple de ticket de données, conforme au patron de la figure 12;
- la figure 14 est un schéma d'application industrielle possible;
- la figure 15 montre un patron de table généré par le système de la figure 14;
- la figure 16 montre un exemple de ticket de données, conforme au patron de la figure 15;
- la figure 17 montre un autre patron de table généré par le système de la figure 14;
- les figures 18a à 18c montrent un exemple de ticket de données, conforme au patron de la figure 17.

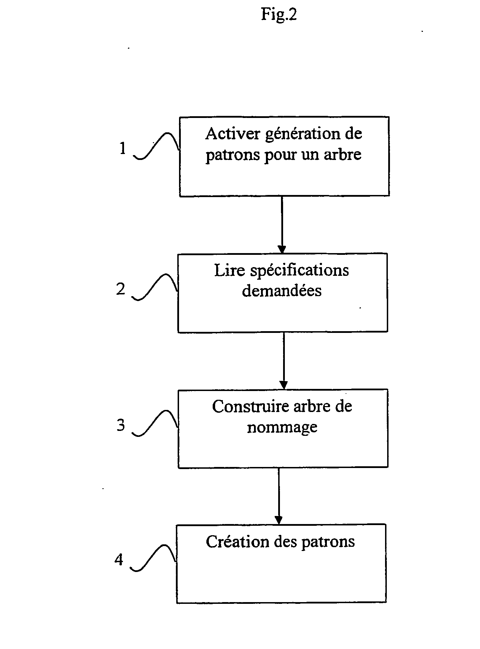

Dans le système décrit à présent en référence à la 1, un traducteur 10 comprend des moyens de communication avec un réseau 16 en vue de recevoir des commandes et de transmettre des données. Le traducteur 10 est une machine telle que par exemple un ordinateur comprenant un processeur et des programmes nécessaires pour mettre en oeuvre les étapes de procédé décrites ultérieurement en référence aux figures 2 à 6. Le traducteur 10 comprend des moyens de lecture dans des bases de données 11 et 15, des moyens d'écriture dans une mémoire de masse 14, des moyens de lecture et d'écriture dans une mémoire 12 et des moyens d'accès à un module 13.

La base de données 11 contient des spécifications de bases d'informations d'administration (MIB pour Management Information Base ou PIB pour Process Information Base en anglais).

La base de données 15 contient des règles de traduction pour fournir chacune un type de champ de patron à au moins un objet spécifié dans la base de données 11.

La mémoire 14 est agencée pour contenir des patrons générés par le traducteur 10.

La mémoire 12 est agencée pour contenir des arbres relatifs à des objets de MIB ou de PIB.

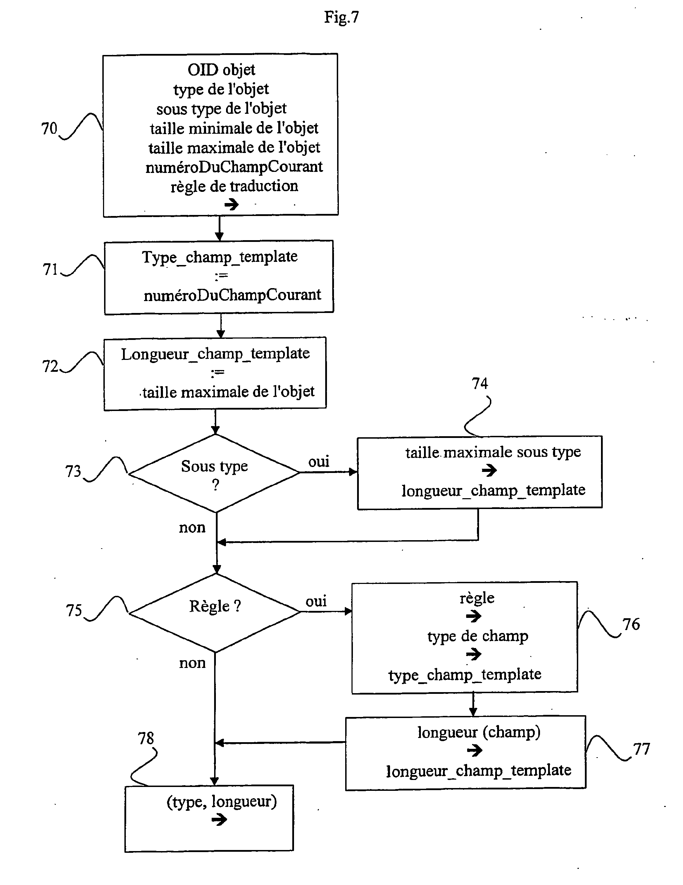

Le module 13 est agencé pour effectuer un typage/nommage d'objets communiqués par le traducteur 10. Le module 13 dispose d'un processeur et de programmes nécessaires à mettre en oeuvre les étapes de procédé décrites ultérieurement en référence à la figure 7.

En référence à la figure 2, une première étape 1 consiste à activer dans le traducteur 10, une génération de patrons (templates) pour un arbre en y associant un paramètre nommé "ObjetRoot". L'arbre peut pointer sur un ensemble de MIBs ou de PIBs, sur une MIB, un sous arbre d'une MIB ou une table d'une MIB. L'activation peut être faite à la demande ou dans le cadre de l'initialisation du système à partir du réseau 16. L'activation fournit une base de numérotation des patrons qui est un paramètre nommé "base_template__ID". On comprendra naturellement que les noms donnés entre guillemets dans la description sont simplement choisis à titre de mémorisation mnémotechnique sans signification particulière et sans valeur limitative, c'est à dire que tout autre nom peut être choisi sans sortir du cadre de l'invention, les noms choisis pour la description désignant bien entendu toujours les mêmes données comme c'est le cas pour les références aux dessins. L'activation fournit aussi un paramètre relatif à une génération de patrons de configuration, et nommé ici "Génération_templates_configuration". Lorsque la valeur de ce paramètre est positionnée par exemple à 0, cela signifie que le procédé doit générer uniquement des patrons standards, c'est à dire essentiellement orientés vers la surveillance et la signalisation (monitoring). Lorsque la valeur de ce paramètre est positionnée par exemple à 1, cela signifie que le procédé doit générer en plus des patrons de configuration, c'est à dire essentiellement orientés vers la configuration des équipements. Un patron standard est relatif à tous les objets et index de l'arbre considéré alors qu'un patron de configuration est relatif aux index, à des objets accessibles en écriture et à la création d'objet.

Une seconde étape 2 consiste à lire les spécifications des MIB ou PIB demandées, dans la mémoire 11. Cette mémoire peut être n'importe quel type de mémoire (mémoire vive, disque ou réseau). Cette étape est optionnelle. Elle n'est pas nécessaire si les spécifications sont déjà disponibles dans le traducteur 10. Cette étape peut être renouvelée en cours de traitement si nécessaire.

Une troisième étape 3 consiste à construire un arbre de nommage des objets à partir des valeurs des identificateurs d'objets contenus dans les MIB ou PIB. Cette étape est optionnelle si l'arbre est déjà présent dans le traducteur 10. Pour construire l'arbre de nommage des objets, le traducteur 10 lit les spécifications des modèles de données écrites en langage SMI dans les MIB ou PIB, interprète chaque clause de la définition de chaque objet de façon à ranger chaque objet dans l'arbre de nommage en utilisant les OID des objets. On rappelle qu'un identificateur d'objet (OID) est un type particulier du langage ASN.1 [X208] utilisant un arbre unique défini pour associer un identifiant portable à une donnée. Cet identifiant est absolu et transférable. La fonction de transfert couramment utilisée est définie dans [X209]. Par exemple SNMP utilise les règles d'encodage de X209. X209 est souvent nommé BER (Basic Encoding Rules).

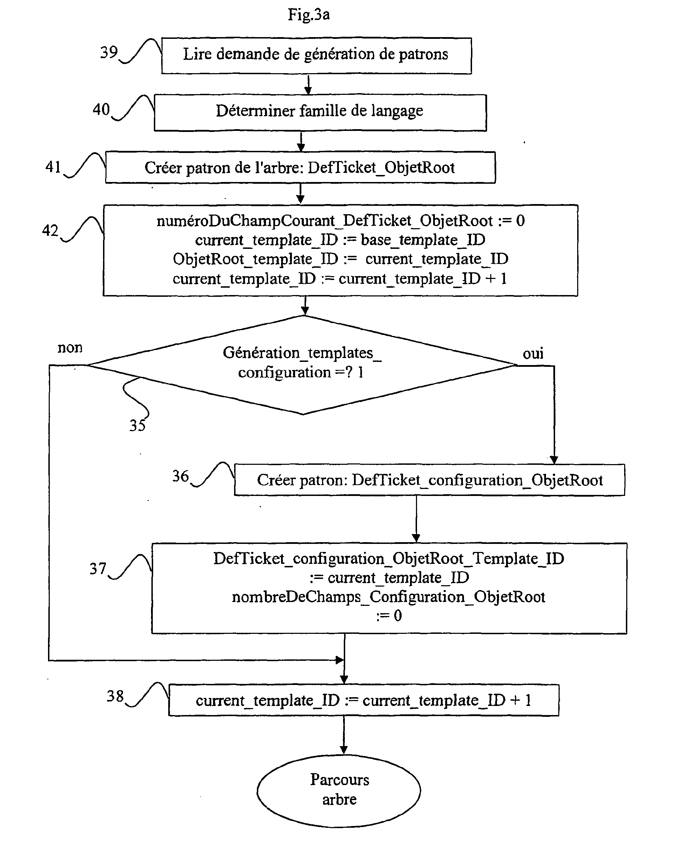

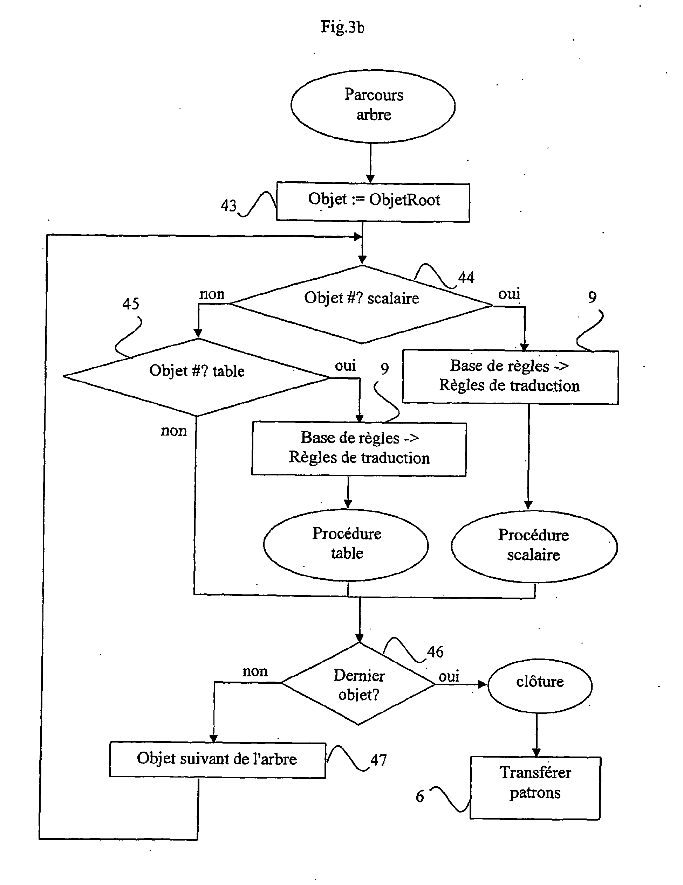

Dans une quatrième étape 4, le traducteur 10 crée des patrons en exécutant les étapes décrites à présent en référence aux figures 3a et 3b.

Une étape 39 consiste à lire la demande de génération de patrons activée dans l'étape 1 pour les objets présents de l'arbre de l'objet "ObjetRoot" et à lire le paramètre de base de numérotation des patrons "base_template_ID".

Une étape 40 consiste à créer une ou plusieurs constantes qui permettent de distinguer des familles de patrons (template) en fonction qu'un patron se rapporte à une MIB, une PIB, ou à une autre famille de langage de spécification. Dans l'exemple de la figure 3a, une constante relative à une MIB, est nommée "DefinitionDeTemplateDeMIB" à laquelle est affectée une valeur deux commune à tous les patrons de MIB. D'autres constantes peuvent être attribuées avec d'autres valeurs signifiant que la structure construite dans les étapes suivantes, est un patron de PIB ou autre.

Une étape 41 consiste à créer un patron "DefTicket_ObjetRoot" pour cet arbre. Le patron est une liste initialement vide de couples par exemple de mots de seize bits.

Une étape 42 consiste à créer une variable "numéroDuChampCourant_DefTicket_ObjetRoot" et à lui affecter une valeur nulle, à créer une variable "current_template_ID" et à lui affecter la valeur du paramètre "base_template_ID", à créer une variable "ObjetRoot_template_ID et à lui affecter la valeur de "current_template_ID", et enfin à incrémenter la valeur de la variable "current_template_ID". La première variable sert à numéroter les champs de données qui seront ajoutés progressivement dans les étapes suivantes pour construire un patron. La deuxième variable sert à numéroter les différents patrons qui seront créés dans les étapes suivantes de sorte que le patron de l'arbre lui-même soit numéroté avec la troisième variable dont la valeur est celle du paramètre de base fourni en étape 1. La deuxième variable est enfin incrémentée de façon à être disponible avec une nouvelle valeur pour un autre patron généré dans les étapes suivantes à partir des objets de l'arbre.

A la suite des étapes 41 et 42 de création de patron standard, une étape 35 consiste à tester si le paramètre "Génération_templates_configuration" vaut 1. Une réponse positive au test déclenche des étapes 36 et 37 pour créer un patron de configuration parallèlement au patron standard. Comme nous le verrons par la suite, un patron de configuration ne concerne que des objets modifiables parmi ceux du patron standard. La moindre taille qui en résulte, réduit les flux d'information nécessaires lors d'une configuration de façon à en accélérer le déroulement. Un patron standard a pour but d'envoyer les valeurs des variables dans l'état où elles sont, ceci généralement depuis le lieu de mesure vers le lieu de traitement. Un patron de configuration quant à lui, a pour usage de fixer des valeurs de variables, voire de créer de nouvelles mesures dans le système de mesure, son sens de circulation est généralement du lieu de gestion vers le lieu de mesure.

L'étape 36 de même nature que l'étape 41, consiste à créer un patron de configuration nommé "DefTicket_configuration_ObjetRoot".

L'étape 37, de même nature que l'étape 42, consiste à créer une variable nommée "DefTicket_configuration_ObjetRoot_Template_ID" et à lui affecter la valeur de "current_template_ID" ainsi qu'à créer une variable nommée "nombreDeChamps Configuration ObjetRoot" et à lui affecter une valeur nulle. La première variable de configuration sert à numéroter le patron de configuration directement à la suite du patron standard. La deuxième variable de configuration sert à compter le nombre de champs du patron de configuration qui est inférieur ou égal au nombre de champs du patron standard.

A la suite des étapes 36 et 37, une étape 38 consiste à incrémenter la variable "current_template_ID" pour identifier une éventuelle création suivante de patron. L'étape 38 est également activée en cas de réponse négative au test de l'étape 35 de sorte que la variable "current_template_ID" est incrémentée indépendamment du fait qu'un patron de configuration soit ou ne soit pas créé. Ainsi, chaque patron standard aura un identificateur de même nature, par exemple pair et le patron de configuration correspondant aura un identificateur de numéro suivant, de nature alors impaire qui permet à la foi de distinguer la nature des patron et d'en faire la correspondance.

Un patron standard initialement vide et respectivement si commandé par l'étape 1, un patron de configuration initialement vide, ayant été créés par les étapes 41 et 42, respectivement- par les étapes 36 et 37, le procédé se poursuit après l'étape 38, par une procédure de parcours de l'arbre, décrit à présent en référence à la figure 3b.

Une succession d'étapes 43 à 47 consiste à balayer l'arbre contenu dans la mémoire 12 en commençant par la racine "ObjetRoot".

L'étape 43 consiste à initialiser un objet courant à l'objet racine.

L'étape 44 consiste à tester si l'objet est un objet de type scalaire. Une MIB contient deux catégories d'objets, les objets individuels encore appelés scalaires et les tables regroupant des objets en lignes, chaque ligne étant identifiée par un index. Une réponse positive au test de l'étape 44 déclenche une procédure scalaire. Une réponse négative au test de l'étape 44 déclenche une étape 45.

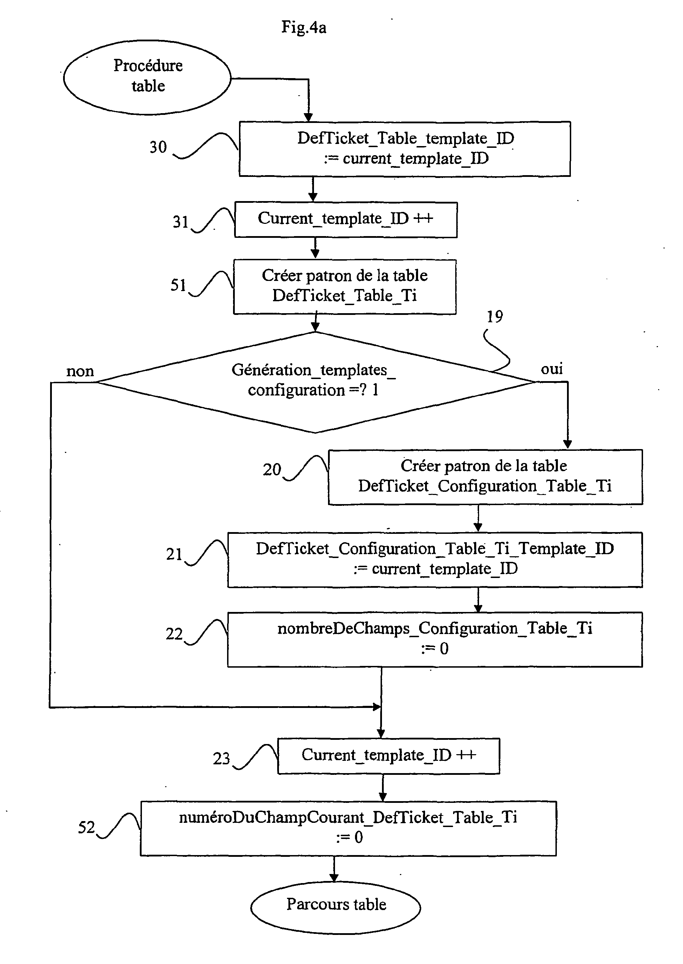

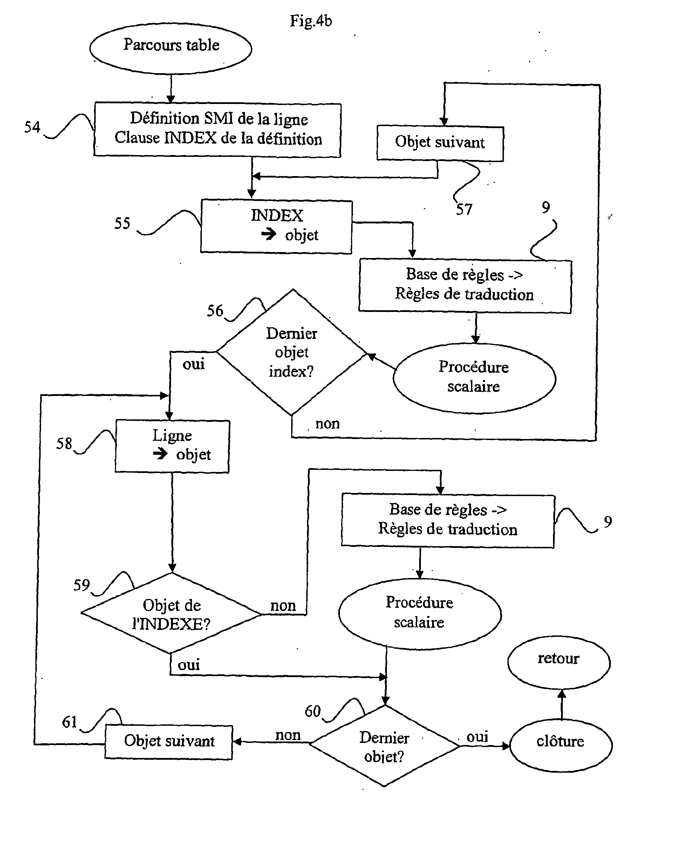

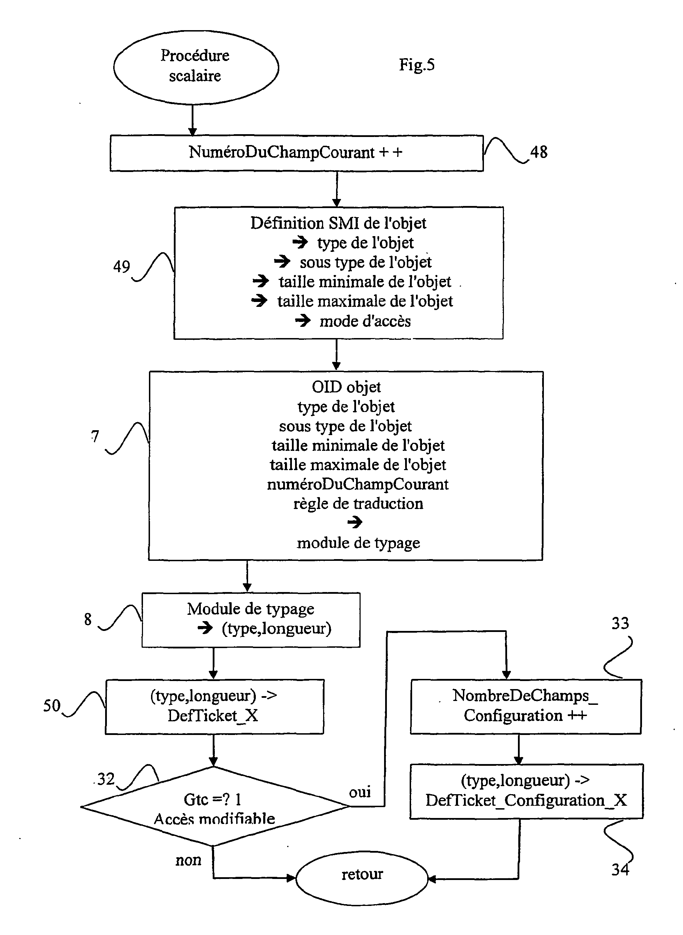

L'étape 45 consiste à tester si l'objet est de type table. Une réponse positive au test de l'étape 45 déclenche une procédure table. Une réponse négative au test de l'étape 45 déclenche directement l'étape 47 décrite ultérieurement. La procédure table et la procédure scalaire seront décrites ultérieurement respectivement en référence aux figures 4 et 5.

En préambule à l'exécution de l'une des procédures table ou respectivement scalaire, une étape 9 consiste à extraire des règles de traduction de table ou respectivement d'objet scalaire, à partir de la base de règles 15.

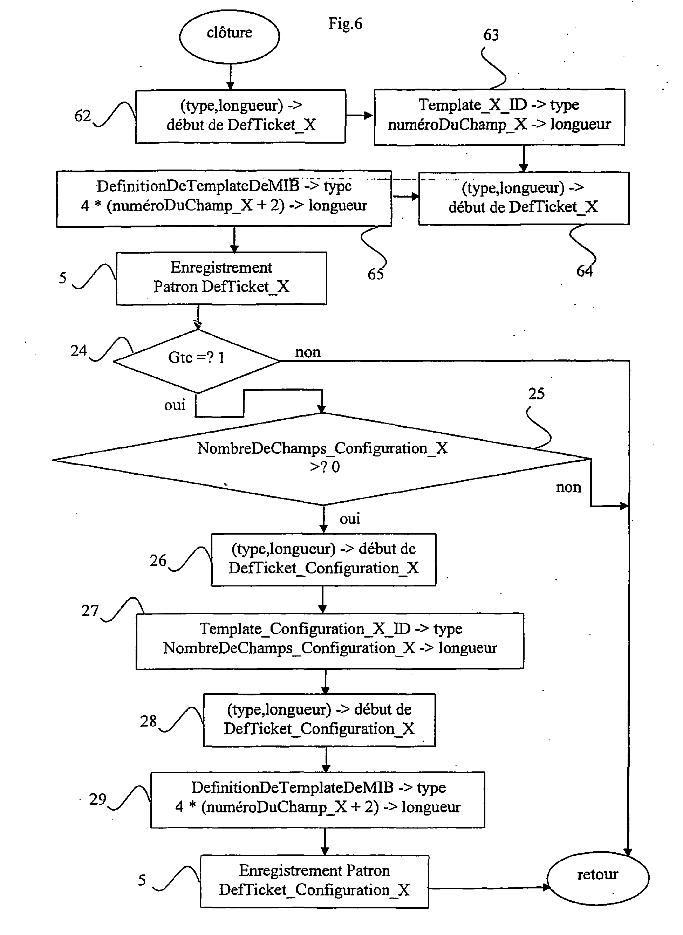

Après exécution de la procédure table ou de la procédure scalaire selon le cas, une étape 46 teste si l'objet courant est le dernier objet de l'arbre. Une réponse positive au test de l'étape 46 déclenche une procédure de clôture décrite ultérieurement en référence à la figure 6. Une réponse négative au test de l'étape 46 déclenche une étape 47. L'étape 47 prend l'objet suivant de l'arbre comme objet courant et reboucle l'exécution du procédé sur l'étape 44.

Après exécution de la procédure de clôture, une étape 6 transfère les patrons générés par le procédé pour répondre à une requête en provenance du réseau 16, directement d'un autre équipement ou en interne.

En référence à la figure 4a, la procédure table commence par une étape 30 dans laquelle est créée une variable nommée "DefTicket_Table_tempiate_ID" et à laquelle est affectée la valeur courante de "current_template_ID". Cette variable sert d'identificateur d'un patron standard de la table détectée en étape 44.

Dans une étape 31, la valeur de "current_template_ID" est incrémentée, de façon à être disponible pour une éventuelle création suivante de patron.

Une étape 51 consiste alors à créer un patron de la table, nommé DefTicket_Table_Ti. De la même façon que le patron de l'arbre créé en étape 41, le patron de la table créé en étape 51, est une liste initialement vide.

A la suite des étapes 30, 31 et 51 de création de patron standard, une étape 19 consiste à tester si le paramètre "Génération_templates_configuration" vaut 1. Une réponse positive au test déclenche des étapes 20 à 22 pour créer un patron de configuration parallèlement au patron standard. Comme nous le verrons par la suite, un patron de configuration ne concerne que des objets modifiables parmi ceux du patron standard. La moindre taille qui en résulte, réduit les flux d'information nécessaires lors d'une configuration de façon à en accélérer le déroulement.

L'étape 20 de même nature que l'étape 51, consiste à créer un patron de configuration nommé "DefTicket_configuration_Table_Ti".

L'étape 21, de même nature que l'étape 30, consiste à créer une variable nommée "DefTicket_configuration_Table_Ti_Template_ID" et à lui affecter la valeur de "current_template_ID".

L'étape 22 consiste à créer une variable nommée "nombreDeChamps_Configuration_Table_Ti" et à lui affecter une valeur nulle.

La variable créée et positionnée en étape 21, sert à numéroter le patron de configuration directement à la suite du patron standard. La variable créée et positionnée en étape 22, sert à compter le nombre de champs du patron de configuration qui est inférieur ou égal au nombre de champs du patron standard.

A la suite des étapes 20 à 22, une étape 23 consiste à incrémenter la variable "current_template_ID" pour identifier une éventuelle création suivante de patron. L'étape 23 est également activée en cas de réponse négative au test de l'étape 19 de sorte que la variable "current_template_ID" est incrémentée indépendamment du fait qu'un patron de configuration soit ou ne soit pas créé. Ainsi, chaque patron standard aura un identificateur de même nature, par exemple pair et le patron de configuration correspondant aura un identificateur de numéro suivant, de nature alors impaire qui permet à la foi de distinguer la nature des patron et d'en faire la correspondance.

Une étape 52 consiste à créer une variable locale nommée "numéroDuChampCourant_DefTicket_Table_TI" et à lui affecter une valeur nulle. L'étape 52 est exécutée indifféremment à la suite de l'étape 51 ou de l'étape 23, le numéro de champ courant servant à la fois à indicer les champs de données du patron de table standard et à en compter la quantité.

Un patron standard initialement vide et si commandé par l'étape 1, respectivement un patron de configuration initialement vide, ayant été créés par les étapes 30, 51 et 52, respectivement par les étapes 20 à 22, le procédé se poursuit par une procédure de parcours de la table, décrit à présent en référence à la figure 4b.

Dans une étape 54, le traducteur 10 lit la définition SMI de la ligne d'entrée de la table et la clause INDEX de la définition.

Une boucle d'étapes 55 à 57 consiste ensuite à lire séquentiellement la définition SMI de chaque objet de l'index. Dans l'étape 55, le traducteur 10 lit un objet de l'index en commençant par le premier objet suite à l'exécution de l'étape 54. Le traducteur 10 déclenche alors la procédure scalaire pour l'objet lu en étape 55 après avoir déclenché en préambule l'étape 9 pour extraire les règles de traduction si elles existent, de cet objet à partir de la base de règles 15. L'étape 9 est en fait optionnelle.

L'étape 56 consiste à tester si l'objet courant est le dernier objet de l'index. Une réponse négative au test reboucle le processus en étape 57 pour l'objet suivant de l'index de façon à réitérer l'étape 55. Une réponse positive au test de l'étape 56 indique que tous les objets de l'index ont été traités.

Après la dernière exécution de l'étape 56, une boucle d'étapes 58 à 61 consiste à traiter les objets de la table qui ne font pas partie de l'index.

En étape 58, le traducteur 10 lit un objet de ligne en commençant par le premier objet de la définition de la ligne de table après la dernière exécution de l'étape 56.

Dans l'étape 59, le traducteur 10 teste si l'objet courant est un objet de l'index. Une réponse négative au test déclenche après exécution de l'étape 9 pour l'objet courant, la procédure scalaire à la suite de laquelle l'étape 60 est activée. Une réponse négative au test de l'étape 59 déclenche directement l'étape 60.

Dans l'étape 60, le traducteur 10 teste si l'objet courant est le dernier objet de la table. Une réponse négative au test de l'étape 60 déclenche l'étape 61 dans laquelle le traducteur 10 réactive l'étape 58 pour l'objet suivant de la table. Une réponse positive au test de l'étape 60 déclenche la procédure de clôture qui sera décrite ultérieurement en référence à la figure 6.

La procédure scalaire est maintenant décrite en référence à la figure 5. Dans une étape 48, une valeur nommée "numéroDuChampCourant" constitue un paramètre d'appel de la procédure scalaire. Ainsi, lorsque la procédure scalaire est déclenchée à partir de l'étape 44, la variable "numéroDuChampCourant" correspond à la variable "numéroDuChampCourant_DefTicket_ObjetRoot". Lorsque la procédure scalaire est déclenchée à partir de l'étape 55 -ou de l'étape 59, la variable "numéroDuChampCourant" correspond à la variable "numéroDuChampCourant_DefTicket Table Ti". L'étape 48 incrémente la valeur de la variable "numéroDuChampCourant".

Dans l'étape 49, le traducteur 10 lit la définition SMI de l'objet de façon à en extraire son type, son sous-type, sa taille minimale, sa taille maximale et son mode d'accès. Le mode d'accès permet de distinguer si l'objet courant est modifiable ou non.

Dans une étape 7, le traducteur 10 transmet au module de typage nommage 13, le type de l'objet, le sous-type de l'objet, la taille minimale de l'objet, la taille maximale de l'objet, le numéro du champ courant et la règle de traduction de l'objet courant.

Dans une étape 8, le module de typage 13 transmet au traducteur 10 les valeurs d'un couple (type, longueur) relatif à l'objet courant.

Dans une étape 50, le traducteur 10 ajoute le couple (type, longueur) dans le patron nommé localement DefTicket_X qui est soit DefTicket_ObjetRoot si la procédure scalaire a été déclenchée à partir de l'étape 44, soit le patron DefTicket_Table_Ti si la procédure scalaire a été déclenchée à partir de l'étape 55 ou de l'étape 59.

Après exécution de l'étape 50, le traducteur 10 active une étape de test 32 qui consiste à vérifier si un patron de configuration est créé, c'est à dire si "Génération_templates_configuration", en abrégé Gtc, vaut 1 et à vérifier si l'objet courant est modifiable.

Une réponse positive au test de l'étape 32, déclenche une étape 33 dans laquelle une variable nommée localement "NombreDeChamps_Configuration" est incrémentée. La variable "NombreDeChamps_Configuration" correspond soit à la variable "NombreDeChamps_Configuration_ObjetRoot" si la procédure scalaire a été déclenchée à partir de l'étape 44, soit à la variable "NombreDeChamps_Configuration_Table_Ti" si la procédure scalaire a été déclenchée à partir de l'étape 55 ou de l'étape 59.

Dans une étape 34, le traducteur 10 ajoute le couple (type, longueur) dans le patron nommé localement DefTicket_Configuration_X qui est soit DefTicket_Configuration_ObjetRoot si la procédure scalaire a été déclenchée à partir de l'étape 44, soit le patron DefTicket_Configuration_Table_Ti si la procédure scalaire a été déclenchée à partir de l'étape 55 ou de l'étape 59. On observe que le couple (type,longueur) est ajouté dans le patron de configuration, avec le même repère que dans le patron standard, à savoir le numéro de champ courant. Ainsi, chaque champ relatif au type et à la longueur d'un même objet, est repéré de façon identique dans le patron standard et le patron de configuration, facilitant ainsi le traitement des données par des équipements utilisant le procédé.

Après exécution de l'étape 34 ou suite à une réponse négative au test de l'étape 32, la procédure scalaire se termine par un retour pour poursuivre l'exécution du procédé en étape 46 si la procédure scalaire a été déclenchée à partir de l'étape 44, en étape 56 si la procédure scalaire a été déclenchée à partir de l'étape 55 ou en étape 60 si la procédure scalaire a été déclenchée à partir de l'étape 59.

La procédure de clôture est décrite à présent en référence à la figure 6.

Dans une étape 62, le traducteur 10 insère une définition d'élément constitué d'un couple (type, longueur) au début du patron dont le nom local DefTicket_X correspond au nom DefTicket_ObjetRoot si la procédure est déclenchée à partir de l'étape 46 et au nom DefTicket_Table_Ti si la procédure de clôture est déclenchée à partir de l'étape 60.

Dans une étape 63, le traducteur 10 affecte la valeur de la variable nommée localement "Template_X_ID" au premier terme et le numéro du champ courant au deuxième terme de la définition de l'élément inséré en étape 62. Comme précédemment, X est remplacé par "ObjetRoot" ou "Table_Ti" selon le cas d'appel de la procédure. La valeur de type affectée au premier terme constitue un identifiant du patron parmi les patrons standards créés. Le numéro du champ affecté au deuxième terme, donne une longueur de patron, exprimée en quantité de champs correspondant chacun à un couple (type, longueur) relatif à un objet traité dans la procédure scalaire ou dans la procédure table selon le cas.

Dans une étape 64, le traducteur 10 insert une définition d'élément constituée d'un couple (type, longueur) au début du patron qui résulte de l'étape 62 et dont le nom DefTicket_X correspond au même nom de patron que dans l'étape 62.

Dans une étape 65, le traducteur 10 affecte la valeur de la constante de définition de patron de l'étape 40, au premier terme de la définition de l'élément inséré en étape 64. La valeur 2 par exemple, indique que la suite de couples générée, est un patron de MIB. Le traducteur 10 ajoute 2 au numéro du champ courant de façon à prendre en compte les deux champs correspondant chacun respectivement au couple inséré en étape 62 et au couple inséré en étape 64. Lorsque chaque terme de couple est constitué par exemple d'un mot de deux octets, le traducteur 10 multiplie le résultat précédemment obtenu par 4 de façon à obtenir une longueur de patron exprimée en octets qui est alors affectée au second terme du couple inséré en étape 64.

Dans une étape 5, le traducteur 10 enregistre le patron standard ainsi obtenu dans la mémoire de masse 14.

Une étape 24 consiste à tester si une création de patron de configuration a été demandée, c'est à dire si le paramètre Gtc en abrégé, est égal à 1. Une réponse négative provoque le retour immédiat de la procédure, aucun patron de configuration n'étant à créer.

Une réponse positive au test de l'étape 24, déclenche une deuxième étape de test 25 qui consiste à tester si le nombre de champs de configuration est positif. Une réponse négative au test provoque le retour de la procédure car lorsque aucun objet scruté pour le patron de configuration, n'est modifiable, le nombre de champs reste nul et il n'y a alors pas lieu d'enregistrer un patron de configuration.

Une réponse positive au test de l'étape 25, déclenche une suite d'étapes 26 à 29 qui se termine par l'étape 5 pour enregistrer un patron de configuration avant le retour de procédure, étant constaté qu'il existe au moins un champ correspondant à un objet modifiable.

Dans l'étape 26, le traducteur 10 insère une définition d'élément constitué d'un couple (type, longueur) au début du patron dont le nom local DefTicket_Configuration_X correspond au nom DefTicket_Configuration_ObjetRoot si la procédure est déclenchée à partir de l'étape 46 et au nom DefTicket_Configuration_Table_Ti si la procédure de clôture est déclenchée à partir de l'étape 60.

Dans l'étape 27, le traducteur 10 affecte la valeur de la variable nommée localement "Template_Configuration_X_ID" au premier terme et le nombre de champs courant au deuxième terme de la définition de l'élément inséré en étape 26. Comme précédemment, X est remplacé par "ObjetRoot" ou "Table_Ti" selon le cas d'appel de la procédure. La valeur de type affectée au premier terme constitue un identifiant du patron parmi les patrons de configuration créés. Le nombre de champs affecté au deuxième terme, donne une longueur de patron, exprimée en quantité de champs correspondant chacun à un couple (type, longueur) relatif à un objet traité dans la procédure scalaire ou dans la procédure table selon le cas.

Dans l'étape 28, le traducteur 10 insert une définition d'élément constituée d'un couple (type, longueur) au début du patron qui résulte de l'étape 27 et dont le nom DefTicket_Configuration_X correspond au même nom de patron que dans l'étape 26.

Dans l'étape 29, le traducteur 10 affecte la valeur de la constante de définition de patron de l'étape 40, au premier terme de la définition de l'élément inséré en étape 64. La valeur 2 par exemple, indique que la suite de couples générée, est un patron de MIB. Le traducteur 10 ajoute 2 au numéro du champ courant de façon à prendre en compte les deux champs correspondant chacun respectivement au couple inséré en étape 26 et au couple inséré en étape 28. Lorsque chaque terme de couple est constitué par exemple d'un mot de deux octets, le traducteur 10 multiplie le résultat précédemment obtenu par 4 de façon à obtenir une longueur de patron exprimée en octets qui est alors affectée au second terme du couple inséré en étape 64.

Dans l'étape 5, le traducteur 10 enregistre le patron de configuration ainsi obtenu dans la mémoire de masse 14.

Le module 13 de typage nommage exécute le procédé décrit à présent en référence à la figure 7.

Dans une étape 70, le module 13 reçoit l'OID de l'objet, le type de l'objet, le sous-type de l'objet, la taille minimale de l'objet, la taille maximale de l'objet, le numéro du champ courant et la règle de traduction qui lui ont été transmis par le traducteur 10 dans l'étape 7 de la procédure scalaire.

Dans une étape 71, le module 13 crée une variable nommée "Type_champ_template" et lui affecte le numéro du champ courant reçu en étape 70. Cette étape permet au module 13 de transmettre un type par défaut qui est le numéro de champ courant dans le patron standard.

Dans une étape 72, le module 13 créé une variable nommée longueur_champ_template et lui affecte la taille maximale de l'objet reçu en étape 70. Cette étape permet au module 13 de transmettre une longueur par défaut qui est la longueur maximale que peut avoir un champ pour l'objet courant.

Dans une étape 73, le module 13 teste s'il existe un sous-type SMI pour l'objet courant. Une réponse positive au test déclenche une étape 74 et une réponse négative au test déclenche une étape 75.

Dans l'étape 74, le module 13 détermine la longueur maximale du sous-type SMI et affecte cette longueur à la variable longueur_champ_template.

L'étape 75 consiste à tester si une règle de traduction associe un type de champ de patron à l'objet correspondant à l'OID reçu ou à son type SMI ou à son sous-type SMI. Une réponse positive au test déclenche une étape 76. Une réponse négative au test déclenche une étape 78.

Dans l'étape 76, le module 13 affecte alors le type de champ procuré par la règle, à la variable "type_champ_template".

Dans une étape 77, le module 13 affecte la longueur de ce type de champ, à la variable nommée "longueur_champ_template". De plus, s'il existe une règle de traduction associant une restriction de longueur à l'objet correspondant à l'OID reçu, alors cette longueur est affectée à la variable "longueur_champ_template".

Dans l'étape 78, le module 13 transmet au traducteur 10, un couple (type,longueur) dont la première valeur est celle de la variable "type_champ_template" et dont la deuxième valeur est celle de la variable "longueur_champ_template".

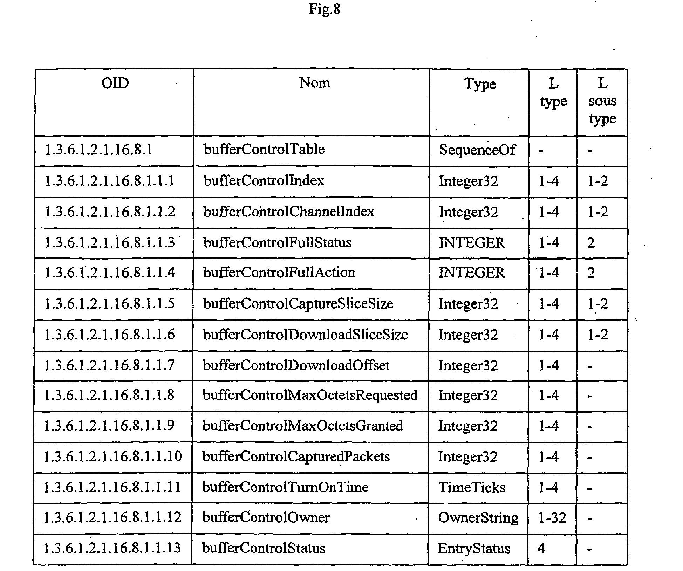

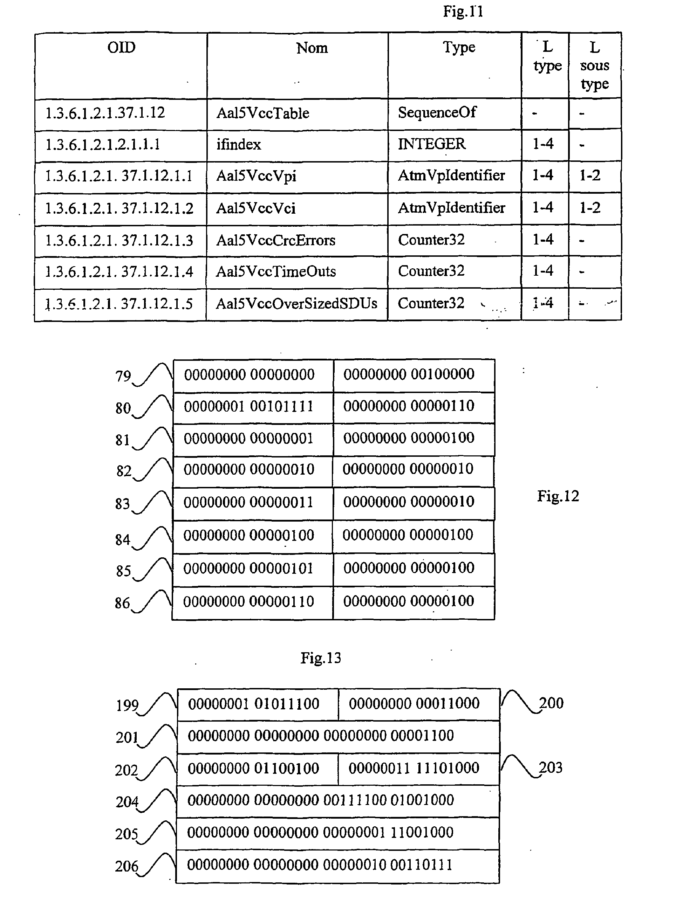

Le procédé en action va maintenant être décrit à partir d'un exemple d'objet qui est une table connue "bufferControlTable" en référence aux figures 8 à 10 et d'un exemple d'objet qui est une autre table connue "Aal5VccTable" en référence aux figures 11 à 13.

La figure 8 est une représentation d'arbre pour une table de MIB dont l'annexe 1 donne un extrait de définition SMI que l'on peut trouver plus détaillée aux pages 75 à 77 de la RFC2819 disponible sur le site Internet http://www.ietf.org.

La première colonne à gauche du tableau donne un numéro de noeud (OID pour Object Identifier) référençant un objet nommé en deuxième colonne avec son type en troisième colonne et sa longueur en quatrième colonne. La dernière colonne à droite donne une longueur de sous type s'il en existe un. La suite de premiers chiffres du numéro de noeud 1.3.6.1.2.16. donne la localisation d'une MIB 11 dans l'arborescence des MIBs. Le chiffre 8.1. suivant indique la localisation de l'objet "BufferControlTable" dans cette MIB. L'arborescence des objets de la table est donné par les chiffres 1.1 à 1.13.

L'arbre ou sous arbre représenté en figure 8 est un exemple de contenu de la mémoire 12 obtenu par le traducteur 10 à partir de la définition SMI de l'annexe 1.

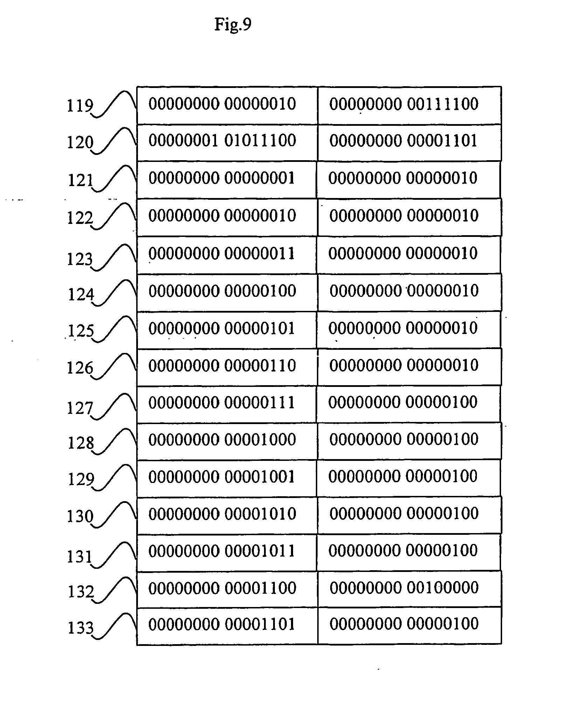

La figure 9 montre un exemple de patron standard dont la génération par le procédé est à présent décrite.

Lorsque le traducteur 10 parcours l'arbre de la MIB 11 référencée 1.3.6.1.2.1.16.8 en mémoire 12, il rencontre en étape 44, l'objet "bufferControlTable" qui est une table référencée 1.3.6.1.2.1.16.8.1 en mémoire 12. Le traducteur 10 exécute alors la procédure table pour laquelle nous supposons par exemple que la variable "current_template_ID" vaut 302 à ce moment en étape 30.

En étape 31, la variable "current__template_ID" est mise à 303. En étape 51, le traducteur 10 crée le patron de la figure 9, initialement vide. On suppose qu'en étape 19, "Génération_templates_configuration" vaut zéro pour simplifier. En étape 23, la variable "current_template_ID" vaut alors 304. En étape 52, la variable "numéroDuChampCourant_DefTicket_Table_Ti" vaut zéro.

En étape 55, le traducteur 10 rencontre l'objet "bufferControlIndex" pour lequel il exécute la procédure scalaire.

En étape 48, la variable "numéroDuChampCourant_DefTicket_Table_Ti" vaut 1.

En étape 49, la définition SMI de l'objet donne le type Integer32 avec un sous type de taille maximale de 2. En étape 8, le module de typage retourne un couple de valeur (1,2). En étape 50, le traducteur 10 ajoute le couple (1,2) sous forme de deux mots binaires 121 chacun de deux octets au patron de la figure 9.

A la suite des étapes 56 et 57, en étape 55, le traducteur 10 rencontre l'objet "bufferControlChannelIndex" pour lequel il exécute la procédure scalaire.

En étape 48, la variable "numéroDuChampCourant_DefTicket_Table_Ti" vaut 2.

En étape 49, la définition SMI de l'objet donne le type Integer32 avec un sous type de taille maximale de 2. En étape 8, le module de typage retourne un couple de valeur (2,2). En étape 50, le traducteur 10 ajoute le couple (2,2) sous forme de deux mots binaires 122 chacun de deux octets au patron de la figure 9.

A la suite de l'étape 56, le traducteur 10 rencontre à nouveau les deux objets précédents et passe directement à l'objet suivant en étape 61.

En étape 58, le traducteur 10 rencontre l'objet "bufferControllFullStatus" pour lequel il exécute la procédure scalaire.

En étape 48, la variable "numéroDuChampCourant_DefTicket_Table_Ti" vaut 3.

En étape 49, la définition SMI de l'objet donne le type INTEGER avec un sous type de taille de 2. En étape 8, le module de typage retourne un couple de valeur (3,2). En étape 50, le traducteur 10 ajoute le couple (3,2) sous forme de deux mots binaires 123 chacun de deux octets au patron de la figure 9.

On peut réitérer les explications précédentes pour chaque objet suivant du tableau de la figure 8, le traducteur 10 ajoutant alors en étape 50, pour chacun rencontré en étape 58, respectivement le couple (4,2), (5,2), (6,2), (7,4), (8,4), (9,4), (10,4), (11,4), (12,32), (13,4) sous forme respective de deux mots binaires 124, 125, 126, 127, 128, 129, 130, 131, 132, 133, chacun de deux octets au patron de la figure 9.

Après atteinte de l'objet "bufferControlStatus" en étape 60, le patron de la figure 9 est alors constitué d'une suite de couples de mots 121 à 133. Le traducteur 10 exécute la procédure de clôture.

En étape 62, le traducteur 10 ajoute un couple de mots binaires 120 au début du patron. En étape 63, le traducteur 10 affecte la valeur 302 au premier mot et la valeur 13 au deuxième mot du couple.

En étape 64, le traducteur 10 ajoute un couple de mots binaires 119 au début du patron. En étape 65, le traducteur 10 affecte la valeur 2 au premier mot et la valeur 60 au deuxième mot du couple.

En étape 5, le traducteur 10 enregistre le patron tel qu'il se présente au final en figure 9.

Le patron de la figure 9 permet de transmettre des tickets de données dont les valeurs sont contenues dans des lignes de la table "bufferControlTable".

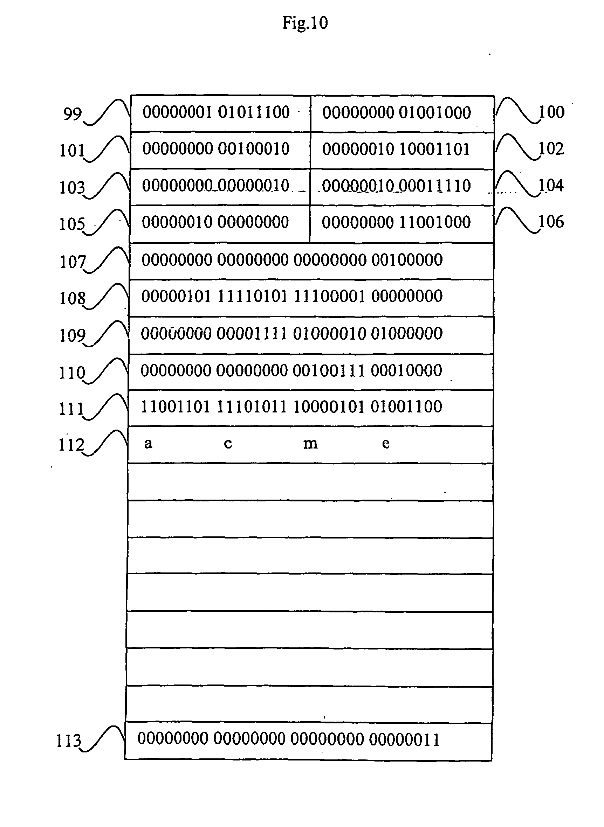

La figure 10 montre un exemple de ticket de données. Supposons que la ligne 34 de la table donne les valeurs suivantes:
- bufferControlIndex = 34
- bufferControlChannelIndex = 654
- bufferControlFullStatus = 2
- bufferControlFullAction = 542
- bufferControlCaptureSliceSize = 512
- bufferControlDownloadSliceSize = 200
- bufferControlDownloadOffset = 32
- bufferControlMaxOctetsRequested = 100000000
- bufferControlMaxOctetsGranted = 1000000
- bufferControlCapturedPackets = 10000
- bufferControlTurnOnTime = 3454764364
- bufferControlOwner = acme
- bufferControlStatus = 3

Dans le ticket de données correspondant de la figure 10, un mot 99 de deux octet contient la valeur 302 qui référence le patron de la figure 9. Un mot 100 de deux octet contient la valeur 72 qui représente la longueur cumulée des 13 champs de données indiqués par le patron de la figure 9 avec les deux mots 99 et 100, soit la longueur totale du ticket de données.

Ensuite des champs 101 à 106 dont la longueur de chacun est donnée respectivement par le deuxième mot des couples 121 à 126 du patron, contiennent respectivement les valeurs 34, 654, 2, 542, 512 et 200. Des champs 107 à 111 dont la longueur de chacun est donnée respectivement par le deuxième mot des couples 127 à 131 du patron, contiennent les valeurs 32, 100000000, 1000000 et 3454764364. Un champ 112 dont la longueur est donnée par le deuxième mot du couple 132, contient la chaîne de caractère acme par exemple codée en ASCII. Un champ 113 dont la longueur est donnée par le deuxième mot du couple 133, contient la valeur 3.

Pour chaque valeur de champ du ticket de donnée, le type donné par le premier mot de chacun des couples 121 à 133 du patron, permet à un destinataire du ticket de reconnaître à quel objet cette valeur appartient.

On notera l'économie de bande passante et la simplification de calcul que permet l'usage des tickets de données. Les données d'entête de message SNMP ne sont pas pris en compte. Le ticket de données de la figure 10 ne contient que quatre octets d'entêtes, les deux premiers pour référencer le patron correspondant et les deux derniers pour en indiquer la longueur de façon à transmettre le contenu d'une ligne de table précédemment obtenue par un SNMP Get.

Pour obtenir la même ligne par SNMP, il aurait fallu d'abord une requête d'interrogation puis une requête de réponse. La requête d'interrogation aurait nécessité un triplet (objet identifier + index value, longueur, valeur) par objet où "objet identier" est l'OID d'un champ de table, index value est la valeur de l'index BufferControlIndex pour identifier plus précisément une instance de l'objet, c'est à dire 12*(11+2) octets soit 156 octets. La réponse aurait nécessité en plus les 30 octets de valeurs, soit 186 octets.

En comparaison des 72 octets du ticket de données, SNMP est donc beaucoup plus gourmand en messages et surtout en débit puisqu'il génère quatre fois plus de trafic. Il est vrai que le transfert de données par ticket nécessite une transmission préalable de patron qui dans l'exemple précédemment décrit de la figure 9, représente 60 octets, ramenant à une génération seulement deux fois moindre de trafic pour une transmission de premier ticket en comparaison de SNMP. Cependant, un même patron peut être utilisé pour des tickets successifs sans avoir besoin d'être transmis à nouveau, réduisant ainsi le trafic dans une proportion de 2 à 4.

La figure 11 est une représentation d'arbre pour une table de la MIB ATM dont l'annexe 2 donne un extrait de définition SMI que l'on peut trouver plus détaillée aux pages 61 à 63 de la RFC1695 disponible sur le site Internet http://www.ietf.org.

La première colonne à gauche du tableau donne un numéro de noeud référençant un objet nommé en deuxième colonne avec son type en troisième colonne et sa longueur en quatrième colonne. La dernière colonne donne la longueur du sous type si elle existe. Le numéro de noeud dans l'arborescence générale des MIBs, est encore appelé OID (Object Identifier). La suite de premiers chiffres du numéro de noeud 1.3.6.1.2.1.37 donne la localisation de la MIB ATM dans l'arborescence des MIBs. Le chiffre 1.12. suivant indique la localisation de l'objet "aal5VccTable" dans la MIB ATM. Une arborescence des objets de la table est donnée par les chiffres 1.1 à 1.5.

Dans la spécification SMI de l'annexe 2, l'index de la table est constitué de trois objets "ifIndex", "aal5VccVpi" et "aal5VccVci". Les deux derniers objets appartenant à la table considérée. Le premier objet appartient à la table "ifTable" d'une autre MIB relative aux interfaces physiques, connue sous le nom de MIBII et localisée dans l'arborescence des MIBs par les chiffres 1.3.6.1.2.1. Le chiffre 2.2 localise la table dans la MIB II L'objet "ifIndex" quant à lui est localisé par les chiffres 1.1. dans la l'arborescence de la table "ifTable".

A partir de la définition SMI de l'annexe 2 et de la MIB II en étape 3, le traducteur 10 construit un arbre de nommage en mémoire 5. Cet arbre est défini à partir des chiffres des OID de la figure 11.

La figure 12 montre un exemple de patron standard dont la génération par le procédé est à présent décrite.

Lorsque le traducteur 10 parcoure le sous arbre 1.3.6.1.2.1.37 de l'arbre constitué de la MIB II et de la MIB ATM en mémoire 12, il rencontre en étape 44, l'objet "aal5VccTable" qui est une table référencée 1.3.6.1.2.1.37.1.12 en mémoire 12. Le traducteur 10 exécute alors la procédure table pour laquelle nous supposons par exemple que la variable "current_template_ID" vaut 303 à ce moment en étape 30.

En étape 31, la variable "current_template_ID" est mise à 304. En étape 51, le traducteur 10 crée le patron de la figure 12, initialement vide. On suppose qu'en étape 19, "Génération_templates_configuration" vaut zéro pour simplifier. En étape 23, la variable "current_template_ID" vaut alors 305. En étape 52, la variable "numéroDuChampCourant_DefTicket_Table_Ti" vaut zéro.

En étape 55, le traducteur 10 rencontre l'objet "ifindex", premier terme de l'index, pour lequel il exécute la procédure scalaire.

En étape 48, la variable "numéroDuChampCourant_DefTicket_Table_Ti" vaut 1.

En étape 49, la définition SMI de l'objet donne le type INTEGER avec une taille maximale de 4. En étape 8, le module de typage retourne un couple de valeur (1,4). En étape 50, le traducteur 10 ajoute le couple (1,4) sous forme de deux mots binaires 81 chacun de deux octets au patron de la figure 12.

A la suite des étapes 56 et 57, en étape 55, le traducteur 10 rencontre l'objet "aal5VccVpi", deuxième terme de l'index, pour lequel il exécute la procédure scalaire.

En étape 48, la variable "numéroDuChampCourant_DefTicket_Table_Ti" vaut 2.

En étape 49, la définition SMI de l'objet donne le type AtmVpIdentifier avec un sous type de taille maximale de 2. En étape 8, le module de typage retourne un couple de valeur (2,2). En étape 50, le traducteur 10 ajoute le couple (2,2) sous forme de deux mots binaires 82 chacun de deux octets au patron de la figure 12.

A la suite des étapes 56 et 57, en étape 55, le traducteur 10 rencontre le troisième terme de l'index, l'objet "aal5VccVci" pour lequel il exécute la procédure scalaire.

En étape 48, la variable "numéroDuChampCourant_DefTicket Table_Ti" vaut 3.

En étape 49, la définition SMI de l'objet donne le type AtmVcIdentifier avec un sous type de taille maximale de 2. En étape 8, le module de typage retourne un couple de valeur (3,2). En étape 50, le traducteur 10 ajoute le couple (3,2) sous forme de deux mots binaires 83 chacun de deux octets au patron de la figure 12.

A la suite de l'étape 56, le traducteur 10 rencontre à nouveau les trois objets précédents et passe chaque fois directement à l'objet suivant en étape 61 en passant par les étapes 58, 59, 60 et 61.

En étape 58, le traducteur 10 rencontre l'objet "aal5VccCrcErrors" pour lequel il exécute la procédure scalaire.

En étape 48, la variable "numéroDuChampCourant_DefTicket_Table_Ti" vaut 4.

En étape 49, la définition SMI de l'objet donne le type Counter32 avec une taille maximale de 4. En étape 8, le module de typage retourne un couple de valeur (4,4). En étape 50, le traducteur 10 ajoute le couple (4,4) sous forme de deux mots binaires 84 chacun de deux octets au patron de la figure 12.

On peut réitérer les explications précédentes pour chaque objet suivant du tableau de la figure 11, le traducteur 10 ajoutant alors en étape 50, pour chacun rencontré en étape 58, respectivement le couple (5,4), (6,4), sous forme respective de deux mots binaires 85, 86, chacun de deux octets au patron de la figure 12.

Après atteinte de l'objet "aal5VccOverSizedSDUs" en étape 60, le patron de la figure 12 est alors constitué d'une suite de couples de mots 81 à 86. Le traducteur 10 exécute la procédure de clôture.

En étape 62, le traducteur 10 ajoute un couple de mots binaires 80 au début du patron. En étape 63, le traducteur 10 affecte la valeur 303 au premier mot et la valeur 6 au deuxième mot du couple.

En étape 64, le traducteur 10 ajoute un couple de mots binaires 79 au début du patron. En étape 65, le traducteur 10 affecte la valeur 2 au premier mot et la valeur 32 au deuxième mot du couple.

En étape 5, le traducteur 10 enregistre le patron tel qu'il se présente au final en figure 12.

Le patron de la figure 12 permet de transmettre des tickets de données dont les valeurs sont contenues dans des lignes de la table "aal5VccTable". Les tickets sont généralement regroupés par bloc de tickets destiné à être émis vers un collecteur.

La figure 13 montre un exemple de ticket de données. Supposons que la ligne de la table décrivant la qualité du trafic du circuit ATM transitant par l'interface 12 et identifié comme le circuit virtuel correspondant au Vci 1000 du Vpi 100, donne les valeurs suivantes:
- ifIndex = 12
- aal5VccVpi = 100
- aal5VccVci = 1000
- aal5VccCrcErrors = 15432
- aal5VccSarTimeOuts = 456
- aal5VccOverSizedSDUs = 567

Dans le ticket de données correspondant de la figure 13, un mot 199 de deux octet contient la valeur 303 qui référence le patron de la figure 12. Un mot 200 de deux octets contient la valeur 24 qui représente la longueur cumulée des 6 champs de données indiqués par le patron de la figure 9 avec les deux mots 199 et 200, soit la longueur totale du ticket de données.

Ensuite des champs 201 à 206 dont la longueur de chacun est donnée respectivement par le deuxième mot des couples 81 à 86 du patron, contiennent respectivement les valeurs 12, 100, 1000, 15432, 456 et 567.

Pour chaque valeur de champ du ticket de donnée, le type donné par le premier mot de chacun des couples 81 à 86 du patron, permet à un destinataire du ticket de reconnaître à quel objet cette valeur appartient.

On notera là encore l'économie de bande passante et la simplification de calcul que permet l'usage des tickets de données.

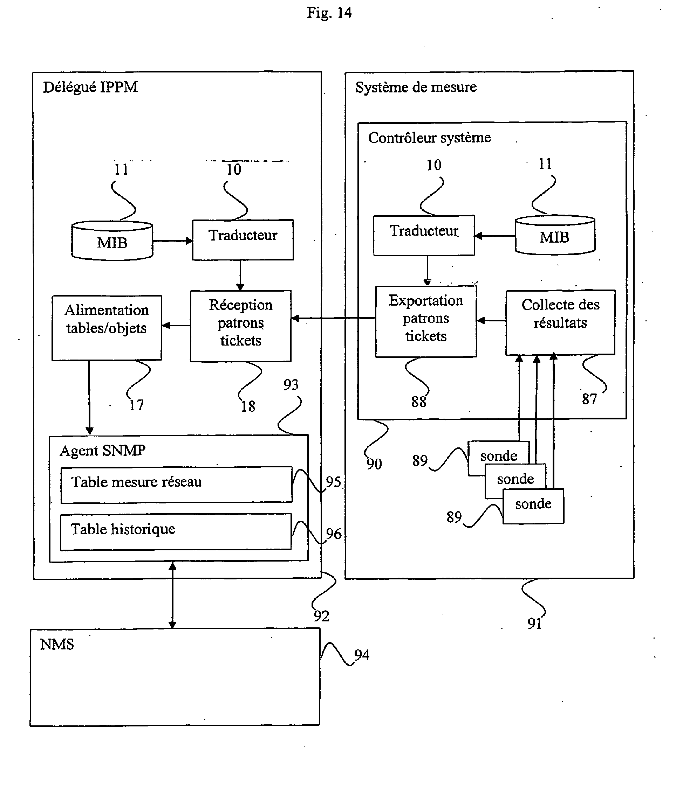

En référence à la figure 14, un système de mesure 91 comprend des sondes 89 de mesure de performances de réseaux IP et un contrôleur système 90 auquel sont connectées les sondes 89.

Un agent SNMP 93 met en oeuvre la MIB 11 IPPM REPORTING MIB en mode délégué (proxy en anglais). Elle est définie dans www.ietf.org/html.characters/ippm-character.html. L'agent 93 est hébergé dans un serveur délégué 92 pour fournir une interface de gestion standard du système de mesure 91, à des systèmes de gestion de réseau 94 (NMS pour Network Management Station) qui peuvent alors consulter les mesures en cours et leurs résultats en utilisant le protocole classique SNMP.

On sait que l'interface connue de gestion IPPM REPORTING MIB définit plusieurs tables dont les tables ippmNetworkMeasureTable et ippmHistoryTable sont retenues ici à titre d'exemple pour illustrer un usage industriel du procédé objet de l'invention. La table de mesure réseau 95 nommée ippmNetworkTable porte des définitions de mesures mises en place entre les sondes par un superviseur 87 hébergé dans le contrôleur 90. Le superviseur 87 effectue la collecte des résultats de mesures en provenance des sondes 89. La table historique 96 nommée ippmHistoryTable stocke les résultats des mesures reçues du superviseur. L'agent 93 comprend une copie de ces deux tables parmi d'autres.

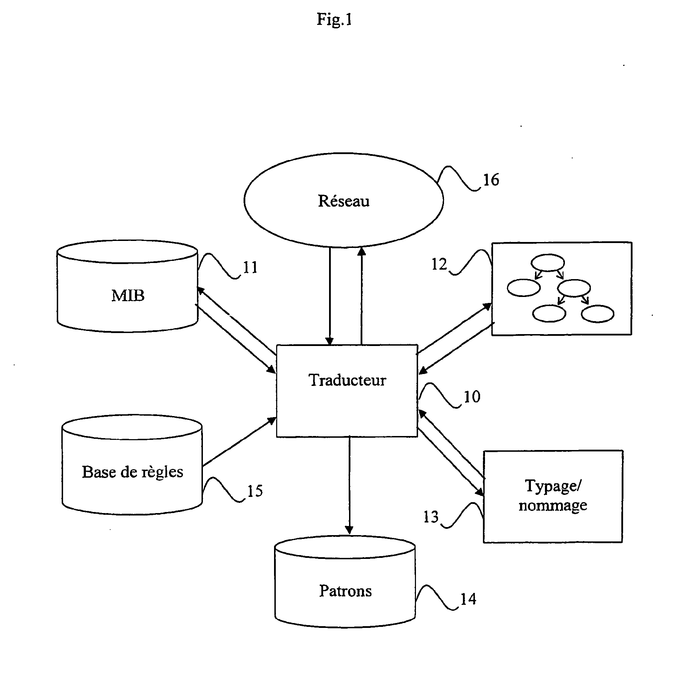

De façon à pouvoir utiliser le procédé précédemment décrit, le système 90 est conforme à la représentation de la figure 1. On retrouve sur la figure 14, le traducteur 10 et la spécification de MIB 11. Le traducteur 10 a ici pour fonction entre autres, de générer des patrons pour les tables ippmNetworkTable et ippmHistoryTable.

Le système 91 comprend aussi un module 88 d'exportation de patrons et de tickets de données. Le serveur délégué 92 comprend un module 18 de réception de patrons et de tickets de données. Pour communiquer, les modules 18 et 88 utilisent un protocole nommé IPFIX, spécialement adapté aux échanges de patrons et de tickets entre modules.

Le serveur délégué 92 comprend aussi ou a accès à une instance du traducteur 10 et de la MIB 11. Ainsi lorsque le système 91 envoie un patron au serveur délégué 92 au moyen du module 88, le serveur délégué 92 recevant ce patron au moyen du module 18, peut se préparer à recevoir des tickets de données contenant les descriptions et les résultats de mesures émises à la suite du patron par le système 91. Le serveur délégué 92 comprend un module 17 auquel le traducteur 10 permet de faire correspondre les champs du patron aux définitions SMI d'objets pour alimenter l'agent 93 en tables et en objets en concordance avec les valeurs qui seront reçues dans les tickets de données.

Ensuite, le système de mesure 91 utilise le protocole IPFX pour remettre au fil de l'eau les mesures mises en place et les résultats de ces mesures, au serveur délégué 92. La station 94 peut alors recevoir les mesures de l'agent 93 de façon classique par le protocole SNMP.

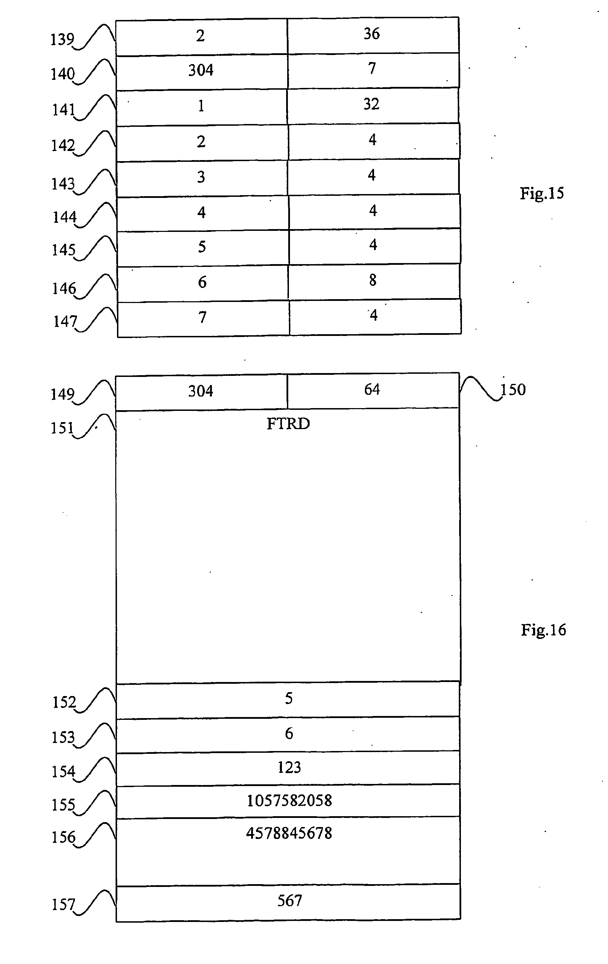

La figure 15 donne un exemple de patron de la table ippmHistoryTable obtenue dans le système 91 au moyen du procédé précédemment décrit. Ici les valeurs dans les différents champs sont exprimées en décimales pour en faciliter une lecture rapide, sachant qu'elles sont exprimées en réalité sous forme binaire.

Le premier et le deuxième mot du couple 139 contiennent respectivement la valeur 2 pour indiquer que la structure de données est un patron et la valeur 36 indiquant en octets la longueur du patron.

Le premier et le deuxième mot du couple 140 contiennent respectivement la valeur 304 pour indiquer que le patron est relatif à la table d'historique et la valeur 7 indiquant la quantité de champs de données du patron.

Le premier et le deuxième mot du couple 141 relatif à l'objet "ippmHistoryMeasureOwner", contiennent respectivement la valeur 1 pour indiquer le type de champ et la valeur 32 indiquant en octets la longueur du champ.

Le premier et le deuxième mot du couple 142 relatif à l'objet "ippmHistoryMeasureIndex", contiennent respectivement la valeur 2 pour indiquer le type de champ et la valeur 4 indiquant en octets la longueur du champ.

Le premier et le deuxième mot du couple 143 relatif à l'objet "ippmHistoryMetricIndex", contiennent respectivement la valeur 3 pour indiquer le type de champ et la valeur 4 indiquant en octets la longueur du champ.

Le premier et le deuxième mot du couple 144 relatif à l'objet "ippmHistoryIndex", contiennent respectivement la valeur 4 pour indiquer le type de champ et la valeur 4 indiquant en octets la longueur du champ.

Le premier et le deuxième mot du couple 145 relatif à l'objet "ippmHistorySequence", contiennent respectivement la valeur 5 pour indiquer le type de champ et la valeur 4 indiquant en octets la longueur du champ.

Le premier et le deuxième mot du couple 146 relatif à l'objet "ippmHistoryTimestamp", contiennent respectivement la valeur 6 pour indiquer le type de champ et la valeur 8 indiquant en octets la longueur du champ.

Le premier et le deuxième mot du couple 147 relatif à l'objet "ippmHistoryValue", contiennent respectivement la valeur 7 pour indiquer le type de champ et la valeur 4 indiquant en octets la longueur du champ.

La figure 16 donne un exemple de ticket de données de la table ippmHistoryTable obtenue dans le système 91 pour être lisible au moyen du patron de la figure 15. Comme c'est le cas pour les autres figures de patron ou de ticket de donnée, une largeur de ligne représente quatre octets, une hauteur de ligne n'est cependant pas proportionnelle au nombre d'octets pour un champ de plus de huit octets de façon à faire tenir la représentation de la figure sur un nombre de pages raisonnable.

Le premier champ 149 contient sur deux octets, la valeur 304 qui est celle du premier mot du couple 140 dans le patron correspondant.

Le deuxième champ 150 contient sur deux octets la valeur 64 pour indiquer la quantité d'octets du ticket de données.

Le champ 151 relatif à l'objet "ippmHistoryMeasureOwner", contient la chaîne de caractères FTRD codée en binaire.

Le champ 152 relatif à l'objet "ippmHistoryMeasureIndex", contient la valeur 5 qui indexe la mesure et la valeur 6 qui indexe un délai d'aller simple.

Le champ 153 relatif à l'objet "ippmHistoryMetricIndex"; contient la valeur 6 qui indexe le type de métrique mesuré, en l'occurrence 6 correspond à un délai unidirectionnel.

Le champ 154 relatif à l'objet "ippmHistoryIndex", contient la valeur 123 pour indiquer que le résultat de la mesure transmis dans ce ticket, est le 123ième.

Le champ 155 relatif à l'objet "ippmHistorySequence", contient la valeur 1057582058 pour indiquer que la mesure a été prise le 14 octobre 2002 à 9 heures 54 minutes 18 secondes.

Le champ 156 relatif à l'objet "ippmHistoryTimestamp", contient la valeur 4578845678 représentative d'une part fractionnelle d'estampillage temporel.

Le champ 157 relatif à l'objet "ippmHistoryValue", contient la valeur 567 qui est celle de la mesure de délai, l'unité étant donnée par le champ 152.

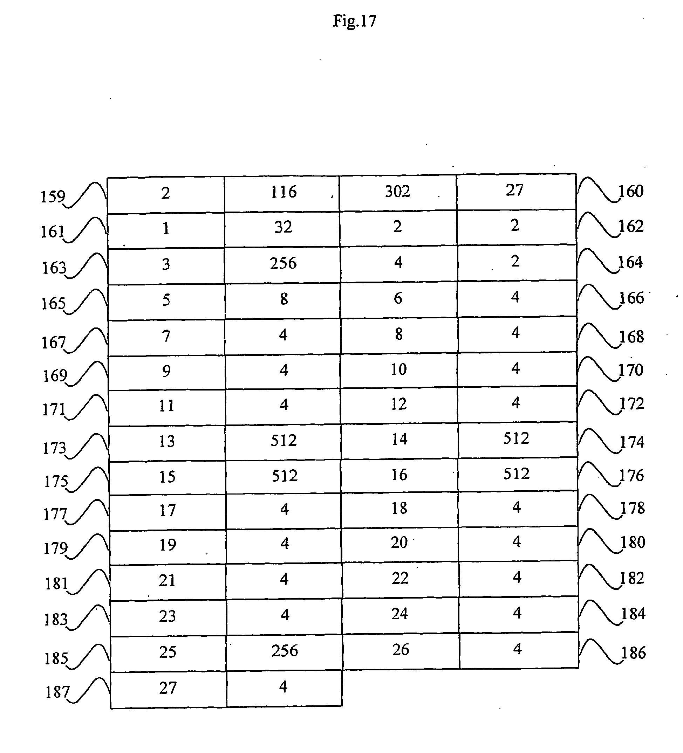

La figure 17 donne un exemple de patron de la table ippmNetworkTable obtenue dans le système 91 au moyen du procédé précédemment décrit. Ici encore les valeurs dans les différents champs sont exprimées en décimales pour en faciliter une lecture rapide, sachant qu'elles sont exprimées en réalité sous forme binaire.

Le premier et le deuxième mot du couple 159 contiennent respectivement la valeur 2 pour indiquer que la structure de données est un patron de MIB et la valeur 116 indiquant en octets la longueur du patron.

Le premier et le deuxième mot du couple 160 contiennent respectivement la valeur 302 pour indiquer que le patron est relatif à la table des mesures réseau et la valeur 27 indiquant la quantité de champs de données formatés par le patron.

Le premier et le deuxième mot du couple 161 relatif à l'objet "ippmNetworkMeasureOwner", contiennent respectivement la valeur 1 pour indiquer le type de champ et la valeur 32 indiquant en octets la longueur du champ.

Le premier et le deuxième mot du couple 162 relatif à l'objet "ippmNetworkMeasureIndex", contiennent respectivement la valeur 2 pour indiquer le type de champ et la valeur 2 indiquant en octets la longueur du champ.

Le premier et le deuxième mot du couple 163 relatif à l'objet "ippmNetworkMetricName", contiennent respectivement la valeur 3 pour indiquer le type de champ et la valeur 256 indiquant en octets la longueur du champ.

Le premier et le deuxième mot du couple 164 relatif à l'objet "ippmNetworkMeasureMetrics", contiennent respectivement la valeur 4 pour indiquer le type de champ et la valeur 8 indiquant en octets la longueur du champ.

Le premier et le deuxième mot du couple 165 relatif à l'objet "ippmNetworkMeasureBeginTime", contiennent respectivement la valeur 5 pour indiquer le type de champ et la valeur 4 indiquant en octets la longueur du champ.

Le premier et le deuxième mot du couple 166 relatif à l'objet "ippmNetworkMeasureCollectionRateUnit", contiennent respectivement la valeur 6 pour indiquer le type de champ et la valeur 4 indiquant en octets la longueur du champ.

Le premier et le deuxième mot du couple 167 relatif à l'objet "ippmNetworkMeasureCollectionRate", contiennent respectivement la valeur 7 pour indiquer le type de champ et la valeur 4 indiquant en octets la longueur du champ.

Le premier et le deuxième mot du couple 168 relatif à l'objet "ippmNetworkMeasureDurationUnit", contiennent respectivement la valeur 8 pour indiquer le type de champ et la valeur 4 indiquant en octets la longueur du champ.

Le premier et le deuxième mot du couple 169 relatif à l'objet "ippmNetworkMeasureDuration", contiennent respectivement la valeur 9 pour indiquer le type de champ et la valeur 4 indiquant en octets la longueur du champ.

Le premier et le deuxième mot du couple 170 relatif à l'objet "ippmNetworkMeasureHistorySize", contiennent respectivement la valeur 10 pour indiquer le type de champ et la valeur 4 indiquant en octets la longueur du champ.

Le premier et le deuxième mot du couple 171 relatif à l'objet "ippmNetworkMeasureFailureMgmtMode", contiennent respectivement la valeur 11 pour indiquer le type de champ et la valeur 4 indiquant en octets la longueur du champ.

Le premier et le deuxième mot du couple 172 relatif à l'objet "ippmNetworkMeasureResultsMgmt", contiennent respectivement la valeur 12 pour indiquer le type de champ et la valeur 4 indiquant en octets la longueur du champ.

Le premier et le deuxième mot du couple 173 relatif à l'objet "ippmNetworkMeasureScrcTypeP", contiennent respectivement la valeur 13 pour indiquer le type de champ et la valeur 512 indiquant en octets la longueur du champ.

Le premier et le deuxième mot du couple 174 relatif à l'objet "ippmNetworkMeasureScrc", contiennent respectivement la valeur 14 pour indiquer le type de champ et la valeur 512 indiquant en octets la longueur du champ.

Le premier et le deuxième mot du couple 175 relatif à l'objet "ippmNetworkMeasureDstT-ypeP", contiennent respectivement la valeur 15 pour indiquer lé type dé champ et la valeur 512 indiquant en octets la longueur du champ.

Le premier et le deuxième mot du couple 176 relatif à l'objet "ippmNetworkMeasureDst", contiennent respectivement la valeur 16 pour indiquer le type de champ et la valeur 512 indiquant en octets la longueur du champ.

Le premier et le deuxième mot du couple 177 relatif à l'objet "ippmNetworkMeasureTransmitMode", contiennent respectivement la valeur 17 pour indiquer le type de champ et la valeur 4 indiquant en octets la longueur du champ.

Le premier et le deuxième mot du couple 178 relatif à l'objet "ippmNetworkMeasureTransmitPacketRateUnit", contiennent respectivement la valeur 18 pour indiquer le type de champ et la valeur 4 indiquant en octets la longueur du champ.

Le premier et le deuxième mot du couple 179 relatif à l'objet "ippmNetworkMeasureTransmitPacketRate", contiennent respectivement la valeur 19 pour indiquer le type de champ et la valeur 4 indiquant en octets la longueur du champ.

Le premier et le deuxième mot du couple 180 relatif à l'objet "ippmNetworkMeasureDeviationOrBurstsize", contiennent respectivement la valeur 20 pour indiquer le type de champ et la valeur 4 indiquant en octets la longueur du champ.

Le premier et le deuxième mot du couple 181 relatif à l'objet "ippmNetworkMeasureMedianOrInterBurstsize", contiennent respectivement la valeur 21 pour indiquer le type de champ et la valeur 4 indiquant en octets la longueur du champ.

Le premier et le deuxième mot du couple 182 relatif à l'objet "ippmNetworkMeasureLossTimeout", contiennent respectivement la valeur 22 pour indiquer le type de champ et la valeur 4 indiquant en octets la longueur du champ.

Le premier et le deuxième mot du couple 183 relatif à l'objet "ippmNetworkMeasureL3PacketSize", contiennent respectivement la valeur 23 pour indiquer le type de champ et la valeur 4 indiquant en octets la longueur du champ.

Le premier et le deuxième mot du couple 184 relatif à l'objet "ippmNetworkMeasureDataPattern", contiennent respectivement la valeur 24 pour indiquer le type de champ et la valeur 4 indiquant en octets la longueur du champ.

Le premier et le deuxième mot du couple 185 relatif à l'objet "ippmNetworkMeasureMap", contiennent respectivement la valeur 25 pour indiquer le type de champ et la valeur 256 indiquant en octets la longueur du champ.

Le premier et le deuxième mot du couple 186 relatif à l'objet "ippmNetworkMeasureSingletons", contiennent respectivement la valeur 26 pour indiquer le type de champ et la valeur 4 indiquant en octets la longueur du champ.

Le premier et le deuxième mot du couple 187 relatif à l'objet "ippmNetworkMeasureOperState", contiennent respectivement la valeur 27 pour indiquer le type de champ et la valeur 4 indiquant en octets la longueur du champ.

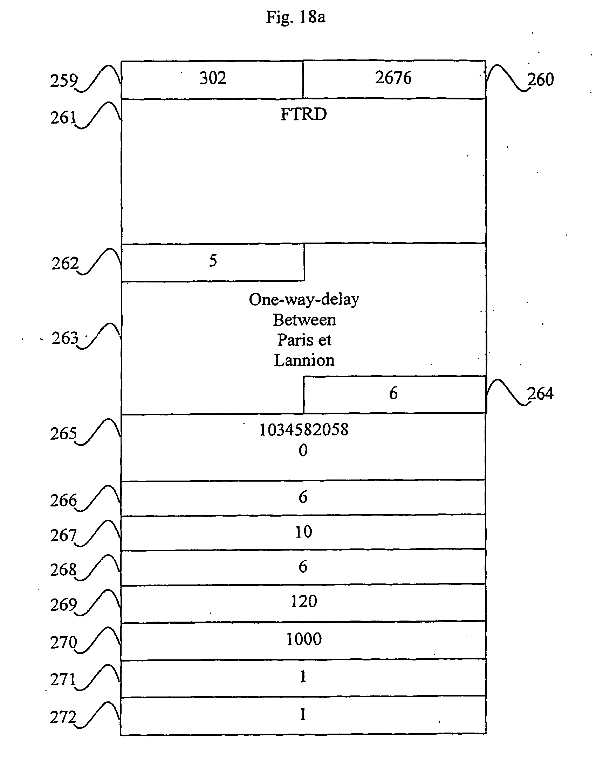

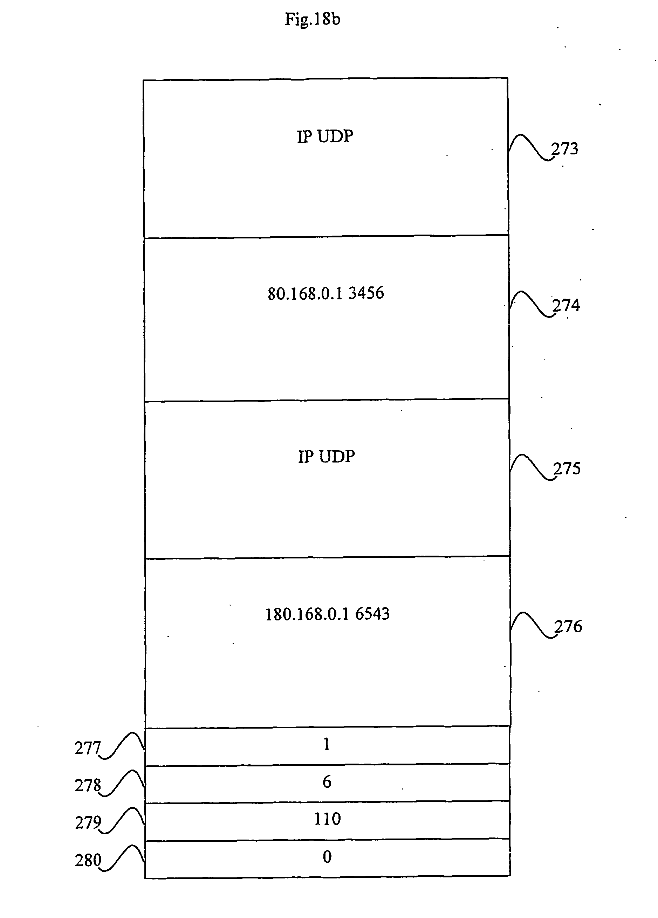

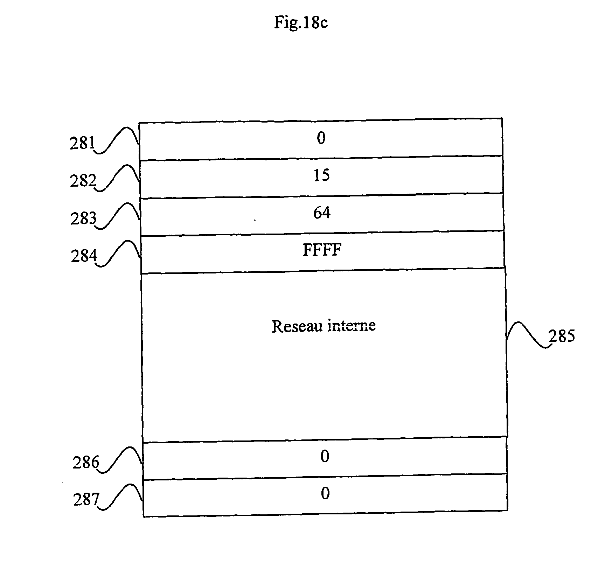

La figure 18 donne un exemple de ticket de données de la table ippmNetworkTable obtenue dans le système 91 pour être lisible au moyen du patron de la figure 17.

Le premier champ 259 contient la valeur 302 qui est celle du premier mot du couple 159 dans le patron correspondant.

Le deuxième champ 260 contient la valeur 2676 pour indiquer la longueur de ticket exprimée en octets.

Le champ 261 relatif à l'objet "ippmNetworkMeasureOwner", contient la chaîne de caractères FTRD codée en binaire pour indiquer le propriétaire de la mesure.

Le champ 262 relatif à l'objet "ippmNetworkMeasureIndex", contient la valeur 5 pour indiquer le numéro de la mesure.

Le champ 263 relatif à l'objet "ippmNetworkMetricName", contient la chaîne de caractères "One-way-delay between Paris et Lannion" codée en binaire pour indiquer en clair ce à quoi se rapporte la mesure.

Le champ 264 relatif à l'objet "ippmNetworkMeasureMetrics", contient la valeur 6 pour indiquer le type de mesure.

Le champ 265 relatif à l'objet "ippmNetworkMeasureBeginTime", contient la valeur 1034582058 pour indiquer que la mesure a débuté le 14 septembre 2003 à 9 heures 54 minutes 18 secondes.

Le champ 266 relatif à l'objet "ippmNetworkMeasureCollectionRateUnit", contient la valeur 0 représentative d'une part fractionnelle d'estampillage temporel.

Le champ 267 relatif à l'objet "ippmNetworkMeasureCollectionRate", contient la valeur 10 pour indiquer le taux d'échantillonage.

Le champ 268 relatif à l'objet "ippmNetworkMeasureDurationUnit", contient la valeur 6 pour indiquer que l'unité de durée de la mesure, est la seconde.

Le champ 269 relatif à l'objet "ippmNetworkMeasureDuration", contient la valeur 120 pour indiquer que la mesure a duré 120 secondes.

Le champ 270 relatif à l'objet "ippmNetworkMeasureHistorySize", contient la valeur 1000 pour indiquer la taille de l'historique de mesure.

Le champ 271 relatif à l'objet "ippmNetworkMeasureFailureMgmtMode", contient la valeur 1 pour indiquer le mode automatique.

Le champ 272 relatif à l'objet "ippmNetworkMeasureResultsMgmt", contient la valeur 1 pour indiquer que les résultats sont communiqués avec bouclage automatique.

Le champ 273 relatif à l'objet "ippmNetworkMea-sureScrcTypeP", contient la chaîne de caractères "IP UDP" pour indiquer le protocole de transfert utilisé par la communication au départ de Paris qui fait l'objet de la mesure.

Le champ 274 relatif - à l'objet "ippmNetworkMeasureScrc", contient la valeur 80.168.0.1 3456 pour indiquer l'adresse source de la communication, ici Paris.

Le champ 275 relatif à l'objet "ippmNetworkMeasureDstTypeP", contient la chaîne de caractères "IP UDP" pour indiquer le protocole de transfert utilisé par la communication à destination de Lannion qui fait l'objet de la mesure.

Le champ 276 relatif à l'objet "ippmNetworkMeasureDst", contient la valeur 180.168.0.1 6543 pour indiquer l'adresse de destination de la communication, ici Lannion.

Le champ 277 relatif à l'objet "ippmNetworkMeasureTransmitMode", contient la valeur 1 pour indiquer que le mode de transmission est périodique.

Le champ 278 relatif à l'objet "ippmNetworkMeasureTransmitPacketRateUnit", contient la valeur 6 pour indiquer que l'unité de taux de paquets de 64 octets transmis, est par seconde.

Le champ 279 relatif à l'objet "ippmNetworkMeasureTransmitPacketRate", contient la valeur 100 pour indiquer que le taux d'émission était de 100 paquets par seconde.

Le champ 280 relatif à l'objet "ippmNetworkMeasureDeviationOrBurstsize", contient la valeur 0 pour indiquer une déviation nulle.

Le champ 281 relatif à l'objet "ippmNetworkMeasureMedianOrInterBurstsize", contient la valeur 0 pour indiquer une taille de rafale nulle.

Le champ 282 relatif à l'objet "ippmNetworkMeasureLossTimeout", contient la valeur 15 pour indiquer que le délai à l'expiration duquel un paquet est considéré perdu, est de 15 secondes.

Le champ 283 relatif à l'objet "ippmNetworkMeasureL3PacketSize", contient la valeur 64 pour indiquer que la taille des paquets émis dans la communication qui fait l'objet de la mesure, est de 64 octets.

Le champ 284 relatif à l'objet "ippmNetworkMeasureDataPattern", contient la valeur FFFF pour indiquer le format des données de mesure.

Le champ 285 relatif à l'objet "ippmNetworkMeasureMap", contient la chaîne de caractères "Reseau interne" pour indiquer en clair le type de réseau.

Le champ 286 relatif à l'objet "ippmNetworkMeasureSingletons", contient la valeur 0 par défaut.

Le champ 287 relatif à l'objet "ippmNetworkMeasureOperState", contient la valeur 0 par défaut.

L'homme du métier appréciera aisément l'économie de bande passante nécessaire au transfert des mesures entre le système 91 et le serveur 92, à partir des deux exemples de tickets de données qui viennent d'être décrits, en comparaison de celle qui aurait été nécessaire en utilisant le protocole SNMP à ce niveau.

Le procédé mis en oeuvre dans le système décrit, conformément à l'invention, est particulièrement utile car il permet de générer automatiquement des patrons à partir de MIBs ou de PIBs pour tout type de structure de données en déchargeant l'être humain de tâches fastidieuses qui en absence de l'invention, auraient consisté à définir manuellement un patron pour chaque structure de données particulière, la quantité de structures de données possibles dans ce domaine étant considérable.

### Annexe 1

| bufferControlTable OBJECT-TYPE | | |
|---|---|---|
| SYNTAX SEQUENCE OF { | | |
| | bufferControlIndex | Integer32, |
| | bufferControlChannelindex | Integer32, |
| | bufferControlFullStatus | INTEGER, |
| | bufferControlFullAction | INTEGER, |
| | bufferControlCaptureSliceSize | Integer32, |
| | bufferControlDownloadSliceSize | Integer32, |
| | bufferControlDownloadOffset | Integer32, |
| | bufferControlMaxOctetsRequested | Integer32, |
| | bufferControlMaxOctetsGranted | Integer32, |
| | bufferControlCapturedPackets | Integer32, |
| | bufferControlTurnOnTime | TimeTicks, |
| | bufferControlOwner | OwnerString, |
| | bufferControlStatus | EntryStatus |
| } | | |
| INDEX { bufferControlIndex} | | |
| ::= { capture 1} | | |

### Annexe 2

| aal5VccTable OBJECT-TYPE | | | |
|---|---|---|---|
| | SYNTAX SEQUENCE OF { | | |
| | | aal5VccVpi | I NTEGER, |
| | | aal5VccVci | INTEGER, |
| | | aal5VccCrcErrors | Counter32, |
| | | aal5VccSarTimeOuts | Counter32, |
| | | aal5VccOverSizedSDUs | Counter32 |
| | } | | |
| | INDEX {ifIndex, aal5VccVpi, aalSVccVci} | | |
| | | ::= {atmMlBObjects 1} | |

## Revendications

1. Procédé pour minimiser une bande passante nécessaire aux transferts d'informations d'administration de réseau de communication, lesdites informations concernant des objets relatifs à des éléments matériels, logiciels ou de fonctionnement de réseau, répertoriés dans une base d'information d'administration (11) et à chacun desquels est associée une spécification en langage formel, **caractérisé en ce qu'**il comprend des étapes consistant à:
- générer (48-50) à partir de ladite spécification pour chaque objet, un couple de mots (121) dont la valeur du premier mot est relative à une indication de l'objet et la valeur du deuxième mot est relative à une longueur d'information de l'objet;
- construire (41-47,51-61) un patron comprenant un ensemble ordonné de couples de mots (121-133) générés et un identificateur (119-120) dudit patron, permettant d'émettre ensuite une suite ordonnée (99-113) d'informations correspondant audit patron.

2. Procédé selon la revendication 1, **caractérisé en ce qu'**il comprend des étapes consistant à:
- parcourir (43-46) un arbre de la base d'information d'administration (11) dont chaque noeud est associé à un objet;
- tester (44) à chaque noeud si l'objet est de type scalaire ou table;
- construire (41-47) le patron en ajoutant le couple de mots généré au patron si l'objet est de type scalaire;
- construire (51-61) un autre patron dit de table si l'objet est de type table pour les objets de la table.

3. Procédé selon la revendication 1 ou 2, **caractérisé en ce qu'**il comprend des étapes consistant à construire (33-37,19-22) en plus un patron de configuration comprenant les couples de mots générés pour des objets à accès modifiable.

4. Procédé de transmission d'informations d'administration de réseau de communication, lesdites informations concernant des objets relatifs à des éléments matériels, logiciels ou de fonctionnement réseau, répertoriés dans une base d'information d'administration (11) et à chacun desquels est associée une spécification en langage formel, **caractérisé en ce qu'**il comprend les étapes suivantes :
- obtenir un patron comprenant, d'une part, un identificateur (119-120) dudit patron et, d'autre part, un ensemble ordonné de couples de mots (121-133), chaque couple de mots étant généré pour un desdits objets à partir de la spécification associée audit objet et comprenant un premier mot ayant une valeur relative à une indication dudit objet et un deuxième mot ayant une valeur relative à une longueur d'information dudit objet ;
- émettre une suite ordonnée (99-113) d'informations correspondant audit patron.

5. Signal composé d'une suite ordonnée (99-113) d'informations d'administration de réseau de communication, lesdites informations concernant des objets relatifs à des éléments matériels, logiciels ou de fonctionnement de réseau, répertoriés dans une base d'information d'administration (11) et à chacun desquels est associée une spécification en langage formel, ladite suite ordonnée correspondant à un patron, ledit patron comprenant, d'une part, un identificateur dudit patron et, d'autre part, un ensemble ordonné de couples de mots (121-133), chaque couple de mots étant généré pour un desdits objets à partir de la spécification associée audit objet et comprenant un premier mot ayant une valeur relative à une indication dudit objet et un deuxième mot ayant une valeur relative à une longueur d'information dudit objet.

6. Système pour minimiser une bande passante nécessaire aux transferts d'informations d'administration de réseau de communication, lesdites informations concernant des objets relatifs à des éléments matériels, logiciels ou de fonctionnement de réseau, répertoriés dans une base d'information d'administration (11) et à chacun desquels est associée une spécification en langage formel, **caractérisé en ce qu'**il comprend un module traducteur (10) agencé pour générer à partir de ladite spécification pour chaque objet, un couple de mots dont la valeur du premier mot est relative à une indication de l'objet et la valeur du deuxième mot est relative à une longueur d'information de l'objet et pour générer un patron comprenant un ensemble ordonné de couples de mots et un identificateur, permettant d'émettre ensuite une suite ordonnée d'informations correspondant audit patron.

7. Système selon la revendication 6 **caractérisé en ce que** le module traducteur (10) est agencé pour parcourir un arbre de la base d'information d'administration (11) dont chaque noeud est associé à un objet, pour tester à chaque noeud si l'objet est de type scalaire ou table et pour construire le patron en ajoutant le couple de mots généré au patron si l'objet est de type scalaire ou construire un autre patron dit de table si l'objet est de type table pour les objets de la table.

8. Système selon la revendication 6 ou 7, **caractérisé en ce que** le module traducteur (10) est agencé pour construire en plus un patron de configuration comprenant les couples de mots générés pour des objets à accès modifiable.

9. Système selon l'une des revendications 6 à 8, **caractérisé en ce qu'**il comprend un module superviseur (87) agencé pour collecter des mesures et un module d'exportation (88) agencé pour transmettre à un serveur (92), au moins un ticket de données relatives à ces mesures.

10. Système selon la revendication 9, **caractérisé en ce que** ledit module d'exportation (88) est agencé pour transmettre :
- un ticket de données comprenant une référence à un patron,
- précédé, dans la transmission, par le patron référencé dans ledit ticket de données.

11. Module traducteur (10) destiné à un système pour minimiser une bande passante nécessaire aux transferts d'informations d'administration de réseau de communication, lesdites informations concernant des objets relatifs à des éléments matériels, logiciels ou de fonctionnement de réseau, répertoriés dans une base d'information d'administration (11) et à chacun desquels est associée une spécification en langage formel, **caractérisé en ce que** ledit module traducteur comprend des moyens agencés pour générer à partir de ladite spécification pour chaque objet, un couple de mots dont la valeur du premier mot est relative à une indication de l'objet et la valeur du deuxième mot est relative à une longueur d'information de l'objet et pour générer un patron comprenant un ensemble ordonné de couples de mots et un identificateur, permettant d'émettre ensuite une suite ordonnée d'informations correspondant audit patron.

12. Module traducteur (10) selon la revendication 11, **caractérisé en ce qu'**il est agencé pour parcourir un arbre de la base d'information d'administration (11) dont chaque noeud est associé à un objet, pour tester à chaque noeud si l'objet est de type scalaire ou table et pour construire le patron en ajoutant le couple de mots généré au patron si l'objet est de type scalaire ou construire un autre patron dit de table si l'objet est de type table pour les objets de la table.

13. Module traducteur (10) selon la revendication 11 ou 12, caractérisé en qu'il est agencé pour construire en plus un patron de configuration comprenant les couples de mots générés pour des objets à accès modifiable.

## Claims

1. Method for minimizing a bandwidth required for the transfers of communication network administration information, said information relating to objects pertaining to hardware, software or network operation elements, catalogued in an administration information base (11) and with each of which is associated a formal language specification, **characterized in that** it comprises steps consisting in:
- generating (48-50) on the basis of said specification for each object, a pair of words (121) the value of whose first word pertains to an indication of the object and the value of whose second word pertains to an information length of the object;
- constructing (41-47, 51-61) a template comprising an ordered set of pairs of words (121-133) generated and an identifier (119-120) of said template, making it possible to subsequently send an ordered string (99-113) of information corresponding to said template.

2. Method according to Claim 1, **characterized in that** it comprises steps consisting in:
- traversing (43-46) a tree of the administration information base (11) each node of which is associated with an object;
- testing (44) at each node whether the object is of scalar or table type;
- constructing (41-47) the template by appending the word pair generated to the template if the object is of scalar type;
- constructing (51-61) another so-called table template if the object is of table type for the objects of the table.

3. Method according to Claim 1 or 2, **characterized in that** it comprises steps consisting in constructing (33-37, 19-22) in addition a configuration template comprising the pairs of words generated for objects with modifiable access.

4. Method of transmitting communication network administration information, said information relating to objects pertaining to hardware, software or network operation elements, catalogued in an administration information base (11) and with each of which is associated a formal language specification, **characterized in that** it comprises the following steps:
- obtaining a template comprising, on the one hand, an identifier (119-120) of said template and, on the other hand, an ordered set of pairs of words (121-133), each pair of words being generated for one of said objects on the basis of the specification associated with said object and comprising a first word having a value pertaining to an indication of said object and a second word having a value pertaining to an information length of said object;
- sending an ordered string (99-113) of information corresponding to said template.

5. Signal composed of an ordered string (99-113) of communication network administration information, said information relating to objects pertaining to hardware, software or network operation elements, catalogued in an administration information base (11) and with each of which is associated a formal language specification, said ordered string corresponding to a template, said template comprising, on the one hand, an identifier of said template and, on the other hand, an ordered set of pairs of words (121-133), each pair of words being generated for one of said objects on the basis of the specification associated with said object and comprising a first word having a value pertaining to an indication of said object and a second word having a value pertaining to an information length of said object.

6. System for minimizing a bandwidth required for the transfers of communication network administration information, said information relating to objects pertaining to hardware, software or network operation elements, catalogued in an administration information base (11) and with each of which is associated a formal language specification, **characterized in that** it comprises a translator module (10) designed to generate on the basis of said specification for each object, a pair of words the value of whose first word pertains to an indication of the object and the value of whose second word pertains to an information length of the object and to generate a template comprising an ordered set of pairs of words and an identifier, making it possible to subsequently send an ordered string of information corresponding to said template.

7. System according to Claim 6, **characterized in that** the translator module (10) is designed to traverse a tree of the administration information base (11) each node of which is associated with an object, so as to test at each node whether the object is of scalar or table type and to construct the template by appending the word pair generated to the template if the object is of scalar type or construct another so-called table template if the object is of table type for the objects of the table.

8. System according to Claim 6 or 7, **characterized in that** the translator module (10) is designed to construct in addition a configuration template comprising the pairs of words generated for objects with modifiable access.

9. System according to one of Claims 6 to 8, **characterized in that** it comprises a supervisor module (87) designed to collect measurements and an exportation module (88) designed to transmit at least one ticket of data pertaining to these measurements to a server (92).

10. System according to Claim 9, **characterized in that** said exportation module (88) is designed to transmit:
- a data ticket comprising a reference to a template,
- preceded, in the transmission, by the template referenced in said data ticket.

11. Translator module (10) intended for a system for minimizing a bandwidth required for the transfers of communication network administration information, said information relating to objects pertaining to hardware, software or network operation elements, catalogued in an administration information base (11) and with each of which is associated a formal language specification, **characterized in that** said translator module comprises means designed to generate on the basis of said specification for each object, a pair of words the value of whose first word pertains to an indication of the object and the value of whose second word pertains to an information length of the object and to generate a template comprising an ordered set of pairs of words and an identifier, making it possible to subsequently send an ordered string of information corresponding to said template.

12. Translator module (10) according to Claim 11, **characterized in that** it is designed to traverse a tree of the administration information base (11) each node of which is associated with an object, so as to test at each node whether the object is of scalar or table type and to construct the template by appending the word pair generated to the template if the object is of scalar type or construct another so-called table template if the object is of table type for the objects of the table.

13. Translator module (10) according to Claim 11 or 12, **characterized in that** it is designed to construct in addition a configuration template comprising the pairs of words generated for objects with modifiable access.

## Patentansprüche

1. Verfahren zum Minimieren einer Bandbreite, die zum Transfer von Kommunikationsnetz-Administrationsinformationen erforderlich ist, wobei die Informationen sich auf Objekte beziehen, die Hardware-, Software- oder Netzfunktionselemente betreffen, die in einer Administrationsinformationsbasis (11) verzeichnet sind und denen jeweils eine Spezifikation in formaler Sprache zugehörig ist, **dadurch gekennzeichnet, dass** es Schritte aufweist, die in Folgendem bestehen:
- Erzeugen (48 bis 50) eines Wortpaars (121), bei dem der Wert des ersten Worts eine Angabe des Objekts betrifft und der Wert des zweiten Worts eine Informationslänge des Objekts betrifft, ausgehend von der Spezifikation für jedes Objekt;
- Konstruieren (41 bis 47, 51 bis 61) eines Musters, das eine geordnete Menge von erzeugten Wortpaaren (121 bis 133) und eine Kennung (119 bis 120) des Musters aufweist, wodurch dann das Senden einer geordneten Folge (99 bis 113) von Informationen ermöglicht wird, die dem Muster entsprechen.

2. Verfahren nach Anspruch 1, **dadurch gekennzeichnet, dass** es Schritte aufweist, die in Folgendem bestehen:
- Durchlaufen (43 bis 46) eines Baums der Administrationsinformationsbasis (11), von dem jeder Knoten einem Objekt zugehörig ist;
- Testen (44) an jedem Knoten, ob das Objekt vom skalaren oder vom Tabellentyp ist;
- Konstruieren (41 bis 47) des Musters durch Hinzufügen des am Muster erzeugten Wortpaars, wenn das Objekt vom skalaren Typ ist;
- Konstruieren (51 bis 61) eines anderen, Tabellenmuster genannten Musters für die Objekte der Tabelle, wenn das Objekt vom Tabellentyp ist.

3. Verfahren nach Anspruch 1 oder 2, **dadurch gekennzeichnet, dass** es Schritte aufweist, die darin bestehen, zusätzlich ein Konfigurationsmuster zu konstruieren (33 bis 37, 19 bis 22), das die für Objekte mit veränderbarem Zugriff erzeugten Wortpaare aufweist.

4. Verfahren zum Übertragen von Kommunikationsnetz-Administrationsinformationen, wobei die Informationen sich auf Objekte beziehen, die Hardware-, Software- oder Netzfunktionselemente betreffen, die in einer Administrationsinformationsbasis (11) verzeichnet sind und denen jeweils eine Spezifikation in formaler Sprache zugehörig ist, **dadurch gekennzeichnet, dass** es die folgenden Schritte aufweist:
- Erhalten eines Musters, das einerseits eine Kennung (119 bis 120) des Musters und andererseits eine geordnete Menge von Wortpaaren (121 bis 133) aufweist, wobei jedes Wortpaar für eines der Objekte ausgehend von der dem Objekt zugehörigen Spezifikation erzeugt wird und ein erstes Wort, das einen Wert aufweist, der eine Angabe des Objekts betrifft, und ein zweites Wort aufweist, das einen Wert aufweist, der eine Informationslänge des Objekts betrifft;
- Senden einer geordneten Folge (99 bis 113) von Informationen, die dem Muster entsprechen.

5. Signal, das aus einer geordneten Folge (99 bis 113) von Kommunikationsnetz-Verwaltungsinformationen zusammengesetzt ist, wobei die Informationen sich auf Objekte beziehen, die Hardware-, Software- oder Netzfunktionselemente betreffen, die in einer Administrationsinformationsbasis (11) verzeichnet sind und denen jeweils eine Spezifikation in formaler Sprache zugehörig ist, wobei die geordnete Folge einem Muster entspricht, wobei das Muster einerseits eine Kennung des Musters und andererseits eine geordnete Menge von Wortpaaren (121 bis 133) aufweist, wobei jedes Wortpaar für eines der Objekte ausgehend von der dem Objekt zugehörigen Spezifikation erzeugt wird und ein erstes Wort, das einen Wert aufweist, der eine Angabe des Objekts betrifft, und ein zweites Wort aufweist, das einen Wert aufweist, der eine Informationslänge des Objekts betrifft.

6. System zum Minimieren einer Bandbreite, die zum Transfer von Kommunikationsnetz-Administrationsinformationen erforderlich ist, wobei die Informationen sich auf Objekte beziehen, die Hardware-, Software- oder Netzfunktionselemente betreffen, die in einer Administrationsinformationsbasis (11) verzeichnet sind und denen jeweils eine Spezifikation in formaler Sprache zugehörig ist, **dadurch gekennzeichnet, dass** es ein Übersetzermodul (10) aufweist, das eingerichtet ist, um ausgehend von der Spezifikation für jedes Objekt ein Wortpaar zu erzeugen, bei dem der Wert des ersten Worts eine Angabe des Objekts betrifft und der Wert des zweiten Worts eine Informationslänge des Objekts betrifft, und zum Erzeugen eines Musters, das eine geordnete Menge von Wortpaaren und eine Kennung aufweist, wodurch dann das Senden einer geordneten Folge von Informationen ermöglicht wird, die dem Muster entsprechen.

7. System nach Anspruch 6, **dadurch gekennzeichnet, dass** das Übersetzermodul (10) eingerichtet ist, um einen Baum der Administrationsinformationsbasis (11) zu durchlaufen, von dem jeder Knoten einem Objekt zugehörig ist, um bei jedem Knoten zu testen, ob das Objekt vom skalaren oder Tabellentyp ist, und um das Muster durch Hinzufügen des am Muster erzeugten Wortpaars zu konstruieren, wenn das Objekt vom skalaren Typ ist, oder für die Objekte der Tabelle ein anderes, Tabellenmuster genanntes Muster zu konstruieren, wenn das Objekt vom Tabellentyp ist.

8. System nach Anspruch 6 oder 7, **dadurch gekennzeichnet, dass** das Übersetzermodul (10) eingerichtet ist, um darüber hinaus ein Konfigurationsmuster zu konstruieren, das für Objekte mit veränderbarem Zugriff erzeugte Wortpaare aufweist.

9. System nach einem der Ansprüche 6 bis 8, **dadurch gekennzeichnet, dass** es ein Supervisormodul (87), das eingerichtet ist, um Messungen zu erfassen, und ein Exportmodul (88) aufweist, das eingerichtet ist, um mindestens ein Ticket mit Daten, die diese Messungen betreffen, an einen Server (92) zu übertragen.

10. System nach Anspruch 9, **dadurch gekennzeichnet, dass** das Exportmodul (88) eingerichtet ist, um Folgendes zu übertragen:
- ein Datenticket, das einen Verweis auf ein Muster aufweist,
- dem in der Übertragung das Muster vorangeht, auf das das Datenticket verweist.

11. Übersetzermodul (10), das für ein System zum Minimieren einer Bandbreite bestimmt ist, die zum Transfer von Kommunikationsnetz-Administrationsinformationen erforderlich ist, wobei die Informationen sich auf Objekte beziehen, die Hardware-, Software- oder Netzfunktionselemente betreffen, die in einer Administrationsinformationsbasis (11) verzeichnet sind und denen jeweils eine Spezifikation in formaler Sprache zugehörig ist, **dadurch gekennzeichnet, dass** das Übersetzermodul Mittel aufweist, die eingerichtet sind, um ausgehend von der Spezifikation für jedes Objekt ein Wortpaar zu erzeugen, bei dem der Wert des ersten Worts eine Angabe des Objekts betrifft und der Wert des zweiten Worts eine Informationslänge des Objekts betrifft, und um ein Muster zu erzeugen, das eine geordnete Menge von Wortpaaren und eine Kennung aufweist, wodurch dann das Senden einer geordneten Folge von Informationen ermöglicht wird, die dem Muster entsprechen.

12. Übersetzermodul (10) nach Anspruch 11, **dadurch gekennzeichnet, dass** es eingerichtet ist, um einen Baum der Administrationsinformationsbasis (11) zu durchlaufen, von dem jeder Knoten einem Objekt zugehörig ist, um bei jedem Knoten zu testen, ob das Objekt vom skalaren oder Tabellentyp ist, und um das Muster durch Hinzufügen des am Muster erzeugten Wortpaars zu konstruieren, wenn das Objekt vom skalaren Typ ist, oder für die Objekte der Tabelle ein anderes, Tabellenmuster genanntes Muster zu konstruieren, wenn das Objekt vom Tabellentyp ist.

13. Übersetzermodul (10) nach Anspruch 11 oder 12, **dadurch gekennzeichnet, dass** es eingerichtet ist, um darüber hinaus ein Konfigurationsmuster zu konstruieren, das die für die Objekte mit veränderbarem Zugriff erzeugten Wortpaare aufweist.
